# EUROPEAN PATENT APPLICATION

(11) **EP 4 704 039 A1**
(43) Date of publication of application: **04.03.2026**
(21) Application number: 24197593.7
(22) Date of filing: 30.08.2024
(51) Int. Cl.: G06T 15/40, G06T 17/00

(54) **A METHOD AND SYSTEM FOR MANAGING OCCLUSIONS IN SCENES RENDERED IN A COMPUTER-SIMULATED ENVIRONMENT**

(71) Applicant: Siemens Aktiengesellschaft, 80333 München (DE)
(72) Inventor: CHATTI, Bhanu venkata sai phani, 522601 Narasaraopeta, Andra pradesh (IN); SINGH, Saurabh Narayan, 81739 München (DE); SRIKAR REDDY, Kuncharapu, 506009 Warangal, Telangana (IN)
(74) Representative: HKW Intellectual Property PartG mbB

(57) **Abstract**

The present invention relates a method and system for managing occlusions in one or more scenes rendered in a computer-simulated environment (120). The method comprises processing 3D multimedia data of scenes from data acquisition devices (104) to detect occluded regions using Neural Networks (NNs). The method comprises determining model optimization parameters based on these occlusions and generating primary Generative Adversarial Network (GAN) models tailored to these regions. The fitness of these GAN models is evaluated by simulating occluded data. The method comprises iteratively generating secondary GAN models until optimal criteria are met. The best-performing GAN models are identified and used to reconstruct the occluded regions within the 3D multimedia data. This reconstructed data is superimposed onto the original scenes to create an augmented 3D visualization. The enhanced 3D scenes are displayed on a user interface associated with an electronic device (110).

## Description

The present invention generally relates to the field of data processing systems, and more particularly relates to a method and a system for managing occlusions in one or more scenes rendered in a computer-simulated environment.

In a computer vision and a visual perception, occlusion constitutes a substantial and pervasive challenge. Occlusion occurs when one object or part of an object is obstructed from view by another object within a scene. This obstruction results in a concealed object becoming partially or invisible from a specific vantage point, thereby complicating the process of accurate scene analysis and interpretation.

For example, on a factory floor, the issue of occlusion is particularly salient during data acquisition activities. This phase involves the deployment of an array of sensors and cameras designed to continuously monitor and collect comprehensive data regarding the operational processes of the factory. The scope of this data collection encompasses various elements, including machinery performance metrics, inventory tracking information, environmental conditions, worker activities, and product-related details. Real-time surveillance of the factory data is facilitated from a centralized control room, where continuous monitoring is essential for operational efficiency.

However, occlusions may frequently arise in such settings, manifesting when machinery, inventory, or personnel obstruct a field of view of the sensors or cameras. These occlusions may occur due to several factors, such as movement of machinery, stacking of inventory, or presence of workers engaged in their tasks. The presence of such obstructions poses significant challenges to the accuracy and reliability of data collection and analysis, as the data captured may be incomplete or distorted, impacting the overall assessment of the manufacturing processes.

Beyond the confines of industrial environments, occlusion remains a pervasive issue across a wide range of data types and contexts. In two-dimensional imaging, including photographs, occlusion occurs when foreground objects obscure the view of background scenes. This problem extends to other domains such as video streams, depth maps, medical imaging, remote sensing technologies, Light Detection and Ranging (LIDAR) data, and augmented reality applications. In these contexts, occlusion issues arise when objects, structures, or even atmospheric conditions intermittently obstruct the line of sight of sensors, cameras, or other data-capturing devices.

Autonomous vehicles also grapple with the challenge of occlusion, which can significantly affect their ability to accurately perceive their environment and detect potential obstacles. In the realm of architectural design, occlusion is a critical consideration when evaluating how structures or objects might impede sunlight or obstruct views, impacting the overall design and functionality of buildings and spaces. Thus, addressing and managing occlusion is a fundamental consideration across various applications that depend on visual or sensor data for precise analysis and informed decision-making.

Further, prevalent methods for addressing the occlusion problem in point clouds involves the use of Generative Adversarial Networks (GANs). Despite the effectiveness, the GANs present several shortcomings when applied to large-scale point cloud augmentation. Firstly, the GANs are complex models that require intricate training processes. Achieving stability in GAN training for point cloud data is often challenging and demands careful tuning of hyperparameters and access to extensive training datasets. Additionally, GANs are susceptible to mode collapse, a phenomenon where the generator produces a limited variety of data, which results in a lack of diversity in the generated point clouds. This issue can lead to overfitting, where the generated data becomes too specific to patterns observed in the training dataset.

Furthermore, GANs require a substantial amount of training data to effectively capture the underlying data distribution. In scenarios where point cloud data is limited, GANs may struggle to generate realistic and diverse samples. Ensuring the quality of the generated point clouds also poses a challenge, as GANs may produce artifacts, outliers, or implausible structures that can negatively impact subsequent analysis and applications. Another concern with GANs is their tendency to overfit, particularly when the training dataset is small or lacks sufficient diversity. This can result in data that is overly specific to the training distribution. Additionally, effectively exploring the latent space of GANs to produce diverse and realistic point clouds can be difficult, and inadequate sampling of the latent space may lead to a lack of variety in the generated data. The GANs may also inherit biases present in the training data, potentially leading to the generation of biased or unfair point clouds that reflect existing prejudices.

A Conventional method provides a digital model repair method by providing a point cloud digital model of a target object to a trained Generative Adversarial Network (GAN). The input point cloud comprises a plurality of points that have been erroneously perturbed due to various causes. The generative network of the GAN, then processes the input to produce an output point cloud in which the erroneous perturbations in some or all of the points have been mitigated. The generative network of the GAN is trained on input point clouds with similar perturbations, while the discriminator of the GAN is trained to differentiate between point clouds with erroneous perturbations and those with minimal or no perturbations. The discriminator is specifically trained to distinguish between point cloud data that is substantially error-free-achieved by applying a noise reduction technique to the perturbed point cloud data-and point cloud data with errors. The noise reduction technique used involves applying winding numbers to the point cloud.

Another conventional method provides a method for complementing three-dimensional (3D) point cloud reconstruction results. The conventional method comprises predicting missing point cloud data through an iterative prediction and correction process. It starts with an incomplete three-dimensional point cloud as input and utilizes a Transformer-based pyramid encoder to learn correlations among points while extracting multi-scale global geometric structures and local detail features. Subsequently, a Transformer-based pyramid decoder is employed to leverage this global and local information, iteratively predicting and filling in missing point cloud data across multiple scales.

Though, the GANs provide significant potential for augmenting point cloud data, the GANs face challenges related to training stability, data diversity, and quality control. Additionally, GANs can be difficult to interpret, complicating the understanding of their output generation processes and the reasons behind specific errors or artifacts. Addressing these limitations and optimizing GAN-based methodologies continues to be a dynamic and evolving area within point cloud processing and deep learning. Further, GAN models often face training challenges such as instability, vanishing gradients, and mode collapse. Vanishing gradients occur when the gradients used in backpropagation become extremely small as they pass through multiple layers of a deep neural network. This results in minimal weight updates and slow or ineffective learning. Mode collapse, on the other hand, happens when a generator of the GAN produces a limited range of outputs, failing to represent the full distribution of the target data.

Therefore, there is a need for an improved, reliable method and system for managing occlusions in one or more scenes rendered in a computer-simulated environment, and to address at least the aforementioned issues of the prior arts.

Therefore, it is an object of the present invention to provide a method and a system for managing occlusions in one or more scenes rendered in a computer-simulated environment.

The object of the present invention is achieved by a method for managing occlusions in one or more scenes rendered in a computer-simulated environment. The method comprises receiving a three-dimensional (3D) multimedia data corresponding to one or more scenes to be rendered in the computer-simulated environment, from one or more data acquisition devices. The received 3D multimedia data comprises a point cloud input data associated with the computer-simulated environment. Further, the one or more scenes comprise one or more entities in a real-world environment. Further, the method comprises detecting one or more occluded regions in the one or more scenes, based on the received 3D multimedia data, using one or more Neural Networks (NNs). In an exemplary embodiment, the method comprises determining one or more model optimization parameters, based on the detected one or more occluded regions in the one or more scenes. The one or more optimization parameters comprise at least one of a population size of models, a maximum number of generation of models, network training parameters, a rate of change of genotypes, a speciation threshold, an elite fraction, a fitness function, a topology mutation rate, a module mutation rate, a node complexity rate, and a network selection strategy.

In an exemplary embodiment, the method comprises generating a plurality of primary generative adversarial network (GAN) models corresponding to the detected one or more occluded regions in the one or more scenes, based on the determined one or more model optimization parameters. The plurality of primary GAN models comprises at least one of a Co-evolutionary Deep NeuroEvolution of Augmenting Topologies Generative Adversarial Network (CoDeep NEAT GAN) model, a Co-evolutionary Deep Generative Adversarial Network (CoDeep GAN) model, a NeuroEvolution of Augmenting Topologies Generative Adversarial Network (NEAT GAN) model, a Co-evolutionary Generative Adversarial Network (Co-GAN) model, and a base models of Generative Adversarial Network (base-GAN) model.

Further, the method comprises evaluating a fitness value of the generated plurality of primary GAN models, by creating an occluded data for the point cloud input data using the generated plurality of primary GAN models. Furthermore, the method comprises iteratively generating a plurality of secondary GAN models, until at least one criteria is satisfied. At least one criteria comprises at least one of reaching a maximum number of target GAN models and reaching one or more target fitness values. The plurality of secondary GAN models comprises at least one of a Co-evolutionary Deep NeuroEvolution of Augmenting Topologies Generative Adversarial Network (CoDeep NEAT GAN) model, a Co-evolutionary Deep Generative Adversarial Network (CoDeep GAN) model, a NeuroEvolution of Augmenting Topologies Generative Adversarial Network (NEAT GAN) model, a Co-evolutionary Generative Adversarial Network (Co-GAN) model, and a base models of Generative Adversarial Network (base-GAN) model. Additionally, the method comprises identifying one or more optimal GAN models from the iteratively generated plurality of secondary GAN models, based on the evaluated fitness value. Each of the plurality of primary GAN models, and each of the plurality of secondary GAN models comprise a generator sub-model and a discriminator sub-model. Each of the plurality of primary GAN models and the secondary GAN models are initialized with a plurality of topologies and a plurality of module configurations.

In an exemplary embodiment, the method comprises reconstructing the detected one or more occluded regions in the 3D multimedia data corresponding to one or more scenes, using the identified one or more optimal GAN models. Further, the method comprises superimposing the reconstructed 3D multimedia data with the one or more scenes, to generate an augmented 3D visualization of the one or more scenes. Furthermore, the method comprises outputting the augmented 3D visualization of the one or more scenes on a user interface associated with an electronic device.

In another exemplary embodiment, the method of identifying the one or more optimal GAN models from the iteratively generated plurality of secondary GAN models, further comprises determining a performance level of each of the generated plurality of secondary GAN models, based on the evaluated fitness value. Further, the method comprises performing at least one of a crossover operation, a speciation operation, and a mutation operation to the generated plurality of secondary GAN models, based on the determined performance level. The crossover operation comprises combining a structural information of the primary GAN models and the plurality of secondary GAN models. Further, the speciation operation comprises segmenting the plurality of primary GAN models and the plurality of secondary GAN models into one or more distinct groups based on a topological similarity. Furthermore, the mutation operation comprises modifying the plurality of primary GAN models and the plurality of secondary GAN models. Additionally, the method comprises generating the plurality of secondary GAN models, based on the performed at least one of the crossover operation, the speciation operation, and the mutation operation. Each of the plurality of secondary GAN models comprise one or more genetic variations.

In another exemplary embodiment, the method further comprises modifying the generated plurality of secondary GAN models, by mutating a plurality of topologies and a plurality of module configurations associated with the generated plurality of secondary GAN models. Further, the method comprises updating the one or more model optimization parameters to generate the plurality of secondary GAN models, using a plurality of tertiary GAN networks. The method further comprises evaluating a secondary fitness value of the generated plurality of secondary GAN models, using one or more predefined fitness rules, based on the updated one or more model optimization parameters. Additionally, the method comprises identifying the one or more optimal GAN models from the generated plurality of secondary GAN models, based on the evaluation. Further, the method comprises fine-tuning the identified one or more optimal GAN models, using at least one of a gradient descent technique and a plurality of optimization techniques.

In yet another exemplary embodiment, the method of updating the one or more model optimization parameters to generate the plurality of secondary GAN models, using the plurality of tertiary GAN networks, further comprises generating optimized weight initialization values for the plurality of secondary GAN models, using the plurality of tertiary GAN networks. The optimized weight initialization values for the plurality of secondary GAN models is based on mutating, during each epoch, a similar tertiary GAN network.

In yet another exemplary embodiment, the method of generating the plurality of the primary GAN models, further comprises iteratively training the generated plurality of primary GAN models, using a historical point cloud data. Further, the method comprises validating the trained plurality of primary GAN models on a test dataset comprising a plurality of occlusion scenarios. Furthermore, the method comprises fine-tuning the trained plurality of primary GAN models, based on results of the validation. Fine-tuning comprises performing hyperparameter optimization of the point cloud data. The hyperparameter optimization comprises at least one of adjusting learning rates, batch sizes, and regularization techniques.

In yet another exemplary embodiment, the method of receiving the 3D multimedia data corresponding to the one or more scenes in the metaverse environment, further comprises generating a synchronized 3D multimedia data by synchronizing the 3D multimedia data received from the one or more data acquisition devices, with a pre-defined 3D multimedia data. One or more data acquisition devices comprises at least one of a Light Detection and Ranging (LIDAR) sensor, a Radio Detection and Ranging (RADAR) sensor, a Red Green Blue (RGB) depth sensor, stereo camera, and a camera. Further, the method comprises pre-processing the synchronized 3D multimedia data. Preprocessing the synchronized 3D multimedia data comprises filtering a noise data from the synchronized 3D multimedia data. Furthermore, the method comprises filtering one or more outlier data points from the synchronized 3D multimedia data, using at least one of a distance-based filtering technique and a range-based filtering technique. One or more outlier data points correspond to a value exceeding at least one of a pre-defined distance and a pre-defined range. Additionally, the method comprises generating a voxel grid visualization data by converting the synchronized 3D multimedia data into the voxel grid visualization data. Further, the method comprises down-sampling the generated voxel grid visualization data to optimize a density of the one or more outlier data points in the received point cloud input data. Furthermore, the method comprises storing, in a database, the pre-processed point cloud input data represented in a three-dimensional (3D) space, based on the down-sampling of the voxel grid visualization data.

In yet another exemplary embodiment, the method of further comprises retrieving the pre-processed point cloud input data represented in the 3D space, from the database. Further, the method comprises generating one or more feature maps corresponding to the pre-processed point cloud input data by performing a Region of Interest (RoI) pooling on the pre-processed point cloud input data. Furthermore, the method comprises detecting one or more candidate objects within the RoI corresponding to the generated one or more feature maps, using one or more Convolutional Neural Networks (CNNs). Additionally, the method comprises suppressing at least one of one or more overlapping detections and one or more redundant detections in the detected one or more candidate objects within the RoI, using a non-maximum suppression technique. Further, the method comprises segmenting a set of objects in the pre-processed point cloud input data, based on the suppressed at least one of the one or more overlapping detections and the one or more redundant detections in the detected candidate objects.

In yet another exemplary embodiment, the method of detecting one or more occluded regions in the one or more scenes, further comprises obtaining a set of segmented objects in the one or more scenes, based on preprocessing the 3D multimedia data. Further, the method comprises generating one or more hypotheses data corresponding to one or more potential occlusions between the set of segmented objects. Furthermore, the method comprises detecting one or more occluded regions in the one or more scenes, based on the generated one or more hypotheses data and one or more feature maps. Additionally, the method comprises estimating a visibility of each of the set of segmented objects, based on detecting the one or more occluded regions in the one or more scenes. Further, the method comprises analyzing one or more depth discontinuity levels between the set of segmented objects, based on the estimated visibility. Additionally, the method comprises assessing a possibility of occlusion in the one or more occluded regions for each of the set of segmented objects, based on the analyzed one or more depth discontinuity levels using probabilistic models. Further, the method comprises determining the one or more occluded regions based on results of assessment.

Another object of the present invention is achieved by a computing system for managing occlusions in one or more scenes rendered in a computer-simulated environment. The computing system comprises one or more processor(s) and a memory coupled to the one or more processor(s). The memory comprises an occlusion management module stored in a form of machine-readable instructions executable by the one or more processor(s). The occlusion management module is capable of performing method steps described above.

Yet another object of the present invention is achieved by a computing environment comprising one or more electronic devices, and one or more technical installations comprising one or more entities in a real-world environment. Further, the computing environment comprises one or more data acquisition devices configured to capture one or more scenes to be rendered in a computer-simulated environment. Further, the computing environment comprises a computing system communicatively coupled to the at least one of the one or more technical installations, the one or more data acquisition devices, and the one or more electronic devices via a network. The computing system comprises an occlusion management module capable of performing method steps described above.

Yet another object of the present invention is achieved by a computer-program product, having machine-readable instructions stored therein, that when executed by a processor(s), cause the processor(s) to perform method steps described above.

The above-mentioned and other features of the invention will now be addressed with reference to the accompanying drawings of the present invention. The illustrated embodiments are intended to illustrate, but not limit the invention.

The present invention is further described hereinafter with reference to illustrated embodiments shown in the accompanying drawings, in which:
- FIG. 1: is a block representation of a computing environment capable of managing occlusions in one or more scenes rendered in a computer-simulated environment, according to an embodiment of the present invention;
- FIG. 2: is a block diagram of a computing system such as those shown in FIG. 1, depicting various components to implement embodiments of the present invention;
- FIG. 3: is a block diagram of an occlusion management module, such as those shown in FIGs. 1 and 2, capable of managing occlusions in one or more scenes rendered in a computer-simulated environment, according to the embodiment of the present invention;
- FIG. 4: is a flow diagram depicting an exemplary method of detecting and correcting occlusions using an evolutionary generative adversarial network (GAN) model, and integrating the corrected data with the original 3D model, according to an embodiment of the present invention;
- FIG. 5: is a flow diagram depicting an exemplary method of processing 3D data, and refinement of the 3D model to handle occlusions, according to the embodiment of the present invention;
- FIG. 6: is a flow diagram depicting an exemplary method of acquiring three-dimensional (3D) point cloud data, according to the embodiment of the present invention;
- FIG. 7: is a flow diagram depicting an exemplary method of detecting 3D objects, according to the embodiment of the present invention;
- FIG. 8: is a flow diagram depicting an exemplary method of detecting occlusion in one or more scenes, according to the embodiment of the present invention;
- FIG. 9: is a flow diagram depicting an exemplary method of integrating model with downstream tasks, according to the embodiment of the present invention;
- FIG. 10: is a flow diagram depicting an exemplary method of training generator and discriminator of a generative adversarial network (GAN) networks, according to the embodiment of the present invention;
- FIG. 11: is a data flow diagram illustrating a process flow of generating primary GAN models, secondary GAN models, according to the embodiment of the present invention; and
- FIG. 12: is a process flowchart illustrating an exemplary method of managing occlusions in one or more scenes rendered in a computer-simulated environment, according to the embodiment of the present invention.

Various embodiments are described with reference to the drawings, wherein like reference numerals are used to refer the drawings, wherein like reference numerals are used to refer to like elements throughout. In the following description, for the purpose of explanation, numerous specific details are set forth in order to provide thorough understanding of one or more embodiments. It may be evident that such embodiments may be practiced without these specific details.

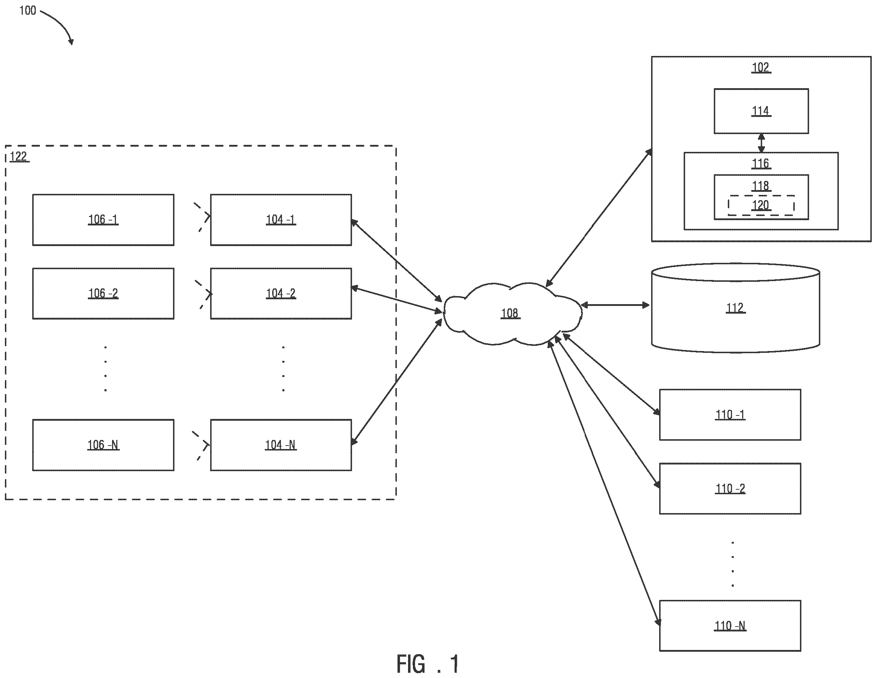

FIG. 1 is a block representation of a computing environment 100 capable of managing occlusions in one or more scenes rendered in a computer-simulated environment, according to an embodiment of the present invention. Particularly, FIG. 1 depicts a computing system 102 which is capable of delivering remote applications for managing a technical installation 122 comprising one or more data acquisition devices 104-1, 104-2, ......, 104-N (individually referred to as the data acquisition device 104, and collectively referred to as the data acquisition devices 104) to capture one or more entities 106-1, 106-2, ......, 106-N (individually referred to as the entities 106, and collectively referred to as the entities 106). As used herein, "computing environment" refers to a processing environment comprising configurable computing physical and logical resources, for example, networks, servers, storage, applications, services, etc., and data distributed over the computing platform. The computing environment 100 provides on-demand network access to a shared pool of the configurable computing physical and logical resources.

The computing system 102 is connected to the technical installation 122 via a communication network 108 (e.g., industrial ethernet or Internet). The technical installation 122 comprises the entities 106. The entities 106 may include objects, subjects, servers, robots, industrial equipment(s), human, sensors, lighting system, and so on. The computing system 102 may be a public cloud, a private cloud, and/or a hybrid cloud or even an edge system configured to provide dedicated remote services to its users. he technical installation 122 comprises the data acquisition devices 104. The data acquisition devices 104 may include at least one of a Light Detection and Ranging (LIDAR) sensor, a Radio Detection and Ranging (RADAR) sensor, a Red Green Blue (RGB) depth sensor, stereo camera, a camera, and so on.

Further, the computing system 102 is also connected to one or more electronic devices 110-1, 110-2, ...., 110-N (individually referred to as the electronic device 110, and collectively referred to as the electronic devices 110) via the communication network 108. The electronic devices 110 may access the computing system 102 for managing occlusions in one or more scenes rendered in a computer-simulated environment 120. Further, the electronic device 110 may be associated with a user, an individual, an administrator, a vendor, a technician, a worker, a specialist, a healthcare worker, an instructor, a supervisor, a team, an entity, an organization, a company, a facility, a bot, any other user, and combination thereof. The entities 106 may include a user, an object a subject, a device, an equipment, a hardware, an infrastructure, an organization, a facility, a hospital, a healthcare facility, an exercise facility, a laboratory facility, an e-commerce warehouse, a merchant organization, an airline company, a hotel booking company, a company, an outlet, a manufacturing unit, an enterprise, an organization, an educational institution, a secured facility, a warehouse facility, a supply chain facility, a vehicle manufacturing/managing organization, a fleet operating company, any other facility, and the like. The electronic device 110 may be used to provide input and/or receive output to/from the computing system 102, and/or to the database 112, respectively. The electronic device 110 may present to the user one or more user interfaces for the user to interact with the computing system 102 and/or to the database 112 for managing occlusions in one or more scenes rendered in a computer-simulated environment 120. The electronic devices 110 may include an electrical, an electronic, an electromechanical, and a computing device. The computing device may include a mobile, a laptop computer, a desktop computer, a tablet computer, a smartphone, a wearable device, a phablet computer, an augmented reality/virtual reality (AR) device, a metaverse-based device, a personal digital assistant (PDA), and the like. The electronic devices 1102 may access remote applications (such as enabling users to manage occlusions in one or more scenes) via a mobile application, a web browser, a computer application, a portal, a platform, a framework, and the like.

The computing system 102 comprises a processor 114, a memory 116. The memory comprises a plurality of modules 118, and the plurality of modules may include the computer-simulated environment 120. The computing system 102 further comprises computing platform (not shown), a server (not shown) including hardware resources and an operating system (OS), a network interface, application program interfaces (APIs) (not shown). Further, the computing environment may include a database 112. The database 112 may comprise occlusion management data, scenes data, entities data, model data, and so on. The database 112 may be of type of a cloud database, a repository, a monetary database, relational database, and so on. The network interface enables communication between the computing system 102, the technical installation 122, and the electronic device(s) 110. The interface (not shown in FIG. 1) may allow one or more users (not shown) at the electronic device(s) 110 to access three-dimensional (3D) multimedia data stored at the computing system 102 and perform one or more actions on the 3D multimedia data as same instance. The server may include one or more servers on which the OS is installed. The servers may comprise one or more processors, one or more storage devices, such as, memory units, for storing data and machine-readable instructions for example, applications and application programming interfaces (APIs), and other peripherals required for providing computing functionality. The computing platform is a platform which enables functionalities such as data reception, data processing, data rendering, data communication, and the like, using the hardware resources and the OS of the servers and delivers the aforementioned remote services using the application programming interfaces deployed therein. The computing platform may comprise a combination of dedicated hardware and software built on top of the hardware and the OS.

The technical installation 122 comprises one or more sensing units and/or capturing units such as the data acquisition devices 104. The one or more sensing unit may be sensors embedded at multiple positions on/in proximity to the entities 106. The one or more sensing unit may be configured for capturing real-time 3D multimedia raw input data and entity data associated with the one or more entities 106. The real-time 3D multimedia raw input data comprises audio data, video data, image data, environmental data, entity data, and so on. Each of the audio data, video data, image data comprises data frames captured by corresponding the data acquisition devices 104. The object data comprises scene information, audio information of an equipment, audio information of an obstacle, a human, and the like. As used herein the communication network 108, refers to, for example, any wired or wireless network such as the internet, an intranet, that implements Bluetooth^{®} of Bluetooth Sig, Inc., a network that implements Wi-Fi^{®} of Wi-Fi Alliance Corporation, an ultra-wideband communication network (UWB), a wireless universal serial bus (USB) communication network, a communication network that implements ZigBee^{®} of ZigBee Alliance Corporation, a general packet radio service (GPRS) network, a mobile telecommunication network such as a global system for mobile (GSM) communications network, a code division multiple access (CDMA) network, a third generation (3G) mobile communication network, a fourth generation (4G) mobile communication network, a fifth generation (5G) mobile communication network, a sixth generation (6G) mobile communication network, a new radio (NR) communication network, a narrow band internet of things network (NB-IoT), an open radio access network (o-RAN), a long-term evolution (LTE) mobile communication network, a public telephone network, and the like., a local area network, a wide area network, an internet connection network, an infrared communication network, and the like, or a network formed from any combination of these networks.

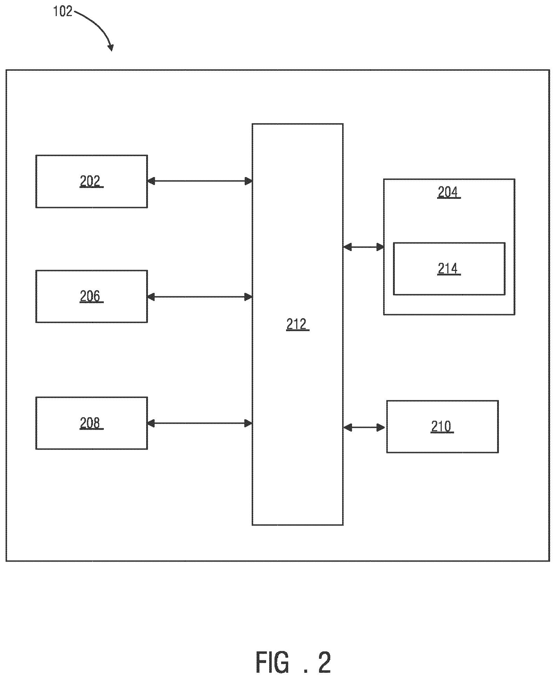

The computing platform comprises an occlusion management module (not shown). A detailed view of various components of the computing system 102 is shown in FIG 2. The computing system 102 may be a standalone system, edge system or a system on a cloud. In a preferred embodiment, the computing system 102 is a cloud based system capable of managing occlusions in one or more scenes rendered in the computer-simulated environment 120.

The database 112 stores the information relating to the technical installation 122 and the electronic device(s) 110. The database 112 is, for example, a structured query language (SQL) data store or a not only SQL (NoSQL) data store. The database 112 is configured as cloud-based database implemented in the computing environment 100, where computing resources are delivered as a service over the computing platform. The database 112, according to another embodiment of the present invention, is a location on a file system directly accessible by the computing platform. The database 112 is configured to store 3D multimedia data and other artifacts pertaining to the output of plurality of modules 118 or the computer-simulated environment 120.

To access the remote applications, 3D multimedia data are required to be deployed on a computing platform, which are then accessed by a personnel on the electronic device(s) 110 to avail the remote applications.

The computing system 102 may comprise a plurality of servers or processors (also known as `cloud infrastructure'), which are geographical distributed, connected with each other via the communication network 108. A dedicated platform (hereinafter referred to as `computing platform') may be installed on the servers/processors for providing above functionality as an application (hereinafter referred to as `remote application'). The computing platform may comprise a plurality of software programs executed on one or more servers or processors of the computing system 102 to enable delivery of the requested applications to the devices and its users.

Further, the computing system 102 may be implemented by way of a single device or a combination of multiple devices that may be operatively connected or networked together. The computing system 102 may be implemented in hardware or a suitable combination of hardware and software. The computing system 102 comprises one or more hardware processor(s) 114, and the memory 116. The memory 116 may include the plurality of modules 118. The system 102 may be a hardware device including the hardware processor 114 executing machine-readable program instructions for managing occlusions in one or more scenes rendered in a computer-simulated environment 120. Execution of the machine-readable program instructions by the hardware processor 114 may enable the computing system 102 to manage occlusions in one or more scenes rendered in a computer-simulated environment. The "hardware" may comprise a combination of discrete components, an integrated circuit, an application-specific integrated circuit, a field-programmable gate array, a digital signal processor, or other suitable hardware. The "software" may comprise one or more objects, agents, threads, lines of code, subroutines, separate software applications, two or more lines of code, or other suitable software structures operating in one or more software applications or on one or more processors.

The one or more hardware processors 114 may include, for example, microprocessors, microcomputers, microcontrollers, digital signal processors, central processing units, state machines, logic circuits, and/or any devices that manipulate data or signals based on operational instructions. Among other capabilities, hardware processor 114 may fetch and execute computer-readable instructions in the memory 116 operationally coupled with the computing system 102 for performing tasks such as data processing, input/output processing, and/or any other functions. Any reference to a task in the present disclosure may refer to an operation being or that may be performed on data.

Though few components and subsystems are disclosed in FIG. 1, there may be additional components and subsystems which is not shown, such as, but not limited to, ports, routers, repeaters, firewall devices, network devices, databases, network attached storage devices, servers, assets, machinery, instruments, facility equipment, emergency management devices, image capturing devices, sensors, vehicle communication infrastructure devices, any other devices, and combination thereof. The person skilled in the art should not be limiting the components/subsystems shown in FIG. 1. Although FIG. 1 illustrates the computing system 102, and the electronic devices 110 connected to the database 112, one skilled in the art can envision that the computing system 102, and the electronic devices 110 can be connected to databases, servers, via the communication network 106.

Those of ordinary skilled in the art will appreciate that the hardware depicted in FIG. 1 may vary for particular implementations. For example, other peripheral devices such as an optical disk drive and the like, local area network (LAN), wide area network (WAN), wireless (e.g., wireless-fidelity (Wi-Fi)) adapter, graphics adapter, disk controller, input/output (I/O) adapter, Internet of Things (IoT) devices, digital twin devices, Artificial Intelligence (AI)/ Machine Learning (ML) devices may also be used in addition or in place of the hardware depicted. The depicted example is provided for explanation only and is not meant to imply architectural limitations concerning the present disclosure.

Those skilled in the art will recognize that, for simplicity and clarity, the full structure and operation of all data processing systems suitable for use with the present disclosure are not being depicted or described herein. Instead, only so much of the system 102 as is unique to the present disclosure or necessary for an understanding of the present disclosure is depicted and described. The remainder of the construction and operation of the computing system 102 may conform to any of the various current implementations and practices that were known in the art.

In an exemplary embodiment, the computing system 102 may receive a three-dimensional (3D) multimedia data corresponding to one or more scenes to be rendered in the computer-simulated environment 120, from the one or more data acquisition devices 104. Examples of the 3D multimedia data include 3D models, 3D animations, virtual reality/augmented reality (VR/AR) environments, metaverse data, 3D renderings, 3D imaging, and 3D prototypes. Further, the received 3D multimedia data comprises a point cloud input data associated with the computer-simulated environment 120. Point cloud data is a collection of data points in three-dimensional space, typically representing the external surface of an object or environment. Each point in a point cloud has its own set of coordinates (X, Y, Z) and sometimes additional attributes like colour, intensity, or normal vectors. These data points are captured by various sensors, such as LiDAR, 3D scanners, or photogrammetry systems, and are used to create detailed 3D models or maps of the physical world. Point cloud data may be used in applications such as 3D modelling, geographic information systems (GIS), autonomous driving, factory setup, technical installation, and virtual/augmented reality, where accurate spatial representation is essential.

Point cloud input data can originate from various sources and be categorized into different types based on how the data is captured or generated. The point cloud input data may comprise light detection and ranging (LiDAR) Data, photogrammetry data, 3D scanning data, synthetic data, radar data, sonar data, computed tomography (CT) scan data, and so on. Additional examples of point cloud input data include terrestrial laser scanning, airborne laser scanning, stereo vision systems, and so on. Point cloud data can also be generated from drone-based LiDAR or photogrammetry, hyperspectral imaging, and time-of-flight (ToF) cameras, for depth sensing.

Further, the one or more scenes comprise one or more entities in a real-world environment associated with the technical installation 122. Further, the computing system 102 may detect one or more occluded regions in the one or more scenes, based on the received 3D multimedia data, using one or more Neural Networks (NNs). The one or more occluded regions can occur in various forms, such as self-occlusion, where parts of an object block other parts of the same object, or object occlusion, where one object obstructs another within a scene. Environmental occlusion is common in both natural and urban settings, where trees, buildings, or other structures block certain areas from view. Shadowed occlusion can occur when shadows cast by objects obscure details, while dynamic occlusion involves moving objects temporarily blocking the view of other elements in a scene. Additionally, partial occlusion happens when only part of an object is hidden, adding complexity to the interpretation of the scene. Further, the NNs may include feedforward neural networks (FNNs), convolutional neural networks (CNNs), recurrent neural networks (RNNs), long short-term memory networks (LSTMs), generative adversarial networks (GANs), autoencoders, radial basis function networks (RBFNs), modular neural networks (MNNs), transformers, and the like.

In an exemplary embodiment, the computing system 102 may determine one or more model optimization parameters, based on the detected one or more occluded regions in the one or more scenes. The one or more optimization parameters comprise at least one of a population size of models, a maximum number of generation of models, network training parameters, a rate of change of genotypes, a speciation threshold, an elite fraction, a fitness function, a topology mutation rate, a module mutation rate, a node complexity rate, a network selection strategy, and the like.

In an exemplary embodiment, the computing system 102 may generate a plurality of primary generative adversarial network (GAN) models corresponding to the detected one or more occluded regions in the one or more scenes, based on the determined one or more model optimization parameters. Generative Adversarial Networks (GANs) are a class of neural network architectures designed for generating synthetic data that resembles real data. GANs consist of two distinct models such as a generator and a discriminator. The generator creates synthetic data, aiming to generate outputs that closely mimic the real data distribution. The generator generates data that is indistinguishable from actual data samples. The discriminator, on the other hand, evaluates the data produced by the generator and determines whether it is real (from the actual dataset) or fake (generated by the generator). These two models are trained together in an adversarial process. The ability of the generator is improved to create realistic data in response to the feedback from the discriminator, while the discriminator enhances its capability to differentiate between real and synthetic data. This iterative process continues until the generator produces data that the discriminator can no longer reliably distinguish from real data. The applications of GANs include image synthesis, style transfer, data augmentation, and even creating realistic simulations for training machine learning models. The GANs generate high-quality, diverse samples that capture the underlying patterns of the real data.

The plurality of primary GAN models comprises at least one of a Co-evolutionary Deep NeuroEvolution of Augmenting Topologies Generative Adversarial Network (CoDeep NEAT GAN) model, a Co-evolutionary Deep Generative Adversarial Network (CoDeep GAN) model, a NeuroEvolution of Augmenting Topologies Generative Adversarial Network (NEAT GAN) model, a Co-evolutionary Generative Adversarial Network (Co-GAN) model, and a base models of Generative Adversarial Network (base-GAN) model. The CoDeep NEAT GAN model may be a framework that integrates concepts from evolutionary algorithms with deep learning and the GANs. The CoDeep NEAT GAN model builds on the NeuroEvolution of Augmenting Topologies (NEAT) algorithm, which is used to evolve neural network architectures through a process of genetic algorithms.

The NEAT is an evolutionary algorithm used to evolve the structure and parameters of neural networks. It starts with a population of simple networks and evolves them over generations, introducing mutations and crossover to improve their performance. NEAT handles both the architecture and weights of the neural networks. The co-evolutionary approach comprises the CoDeep NEAT GAN employing a co-evolutionary strategy where both the generator and discriminator networks evolve simultaneously. This approach allows both networks to adapt and improve in response to each other changes. The architecture of the generator and learning capabilities evolve to produce more convincing data, while the discriminator evolves to better differentiate between real and synthetic data.

Further, the computing system 102 may evaluate a fitness value of the generated plurality of primary GAN models, by creating an occluded data for the point cloud input data using the generated plurality of primary GAN models. The fitness value is assessing performance of the GAN through various evaluation metrics and loss functions that reflect the effectiveness of the generator and discriminator. The performance of the generator is gauged by how well it can produce data that convincingly mimics real data, while the performance discriminator is measured by respective ability to accurately distinguish between real and generated samples. To evaluate the quality of generated data, metrics such as the inception score (IS) and Frechet inception distance (FID) are commonly employed. The inception score assesses both the quality and diversity of generated images, while the FID measures the similarity between the distributions of real and generated images. Additionally, precision and recall metrics are used to evaluate the fidelity and variety of the generated samples. The adversarial loss functions, such as binary cross-entropy, also play a crucial role in assessing how well the generator and discriminator are performing their respective tasks. These metrics and loss functions collectively provide insights into the effectiveness of the ability of the GAN models to generate realistic data and differentiate it from real data.

Furthermore, the computing system 102 may iteratively generate a plurality of secondary GAN models, until at least one criteria is satisfied. At least one criteria comprises at least one of reaching a maximum number of target GAN models and reaching one or more target fitness values. The plurality of secondary GAN models comprises at least one of a Co-evolutionary Deep NeuroEvolution of Augmenting Topologies Generative Adversarial Network (CoDeep NEAT GAN) model, a Co-evolutionary Deep Generative Adversarial Network (CoDeep GAN) model, a NeuroEvolution of Augmenting Topologies Generative Adversarial Network (NEAT GAN) model, a Co-evolutionary Generative Adversarial Network (Co-GAN) model, a base models of Generative Adversarial Network (base-GAN) model, and the like.

Additionally, the computing system 102 may identify one or more optimal GAN models from the iteratively generated plurality of secondary GAN models, based on the evaluated fitness value. Each of the plurality of primary GAN models, and each of the plurality of secondary GAN models comprise a generator sub-model and a discriminator sub-model. Each of the plurality of primary GAN models and the secondary GAN models are initialized with a plurality of topologies and a plurality of module configurations.

In the process of initializing the GANs models, each GAN model, whether it is a primary or secondary model, is set up with a variety of different network architectures and configurations. This implies that a number of primary GAN models are created, each with its own unique structure. These primary GAN models are designed to learn and generate realistic data through adversarial training. Alongside these, the secondary GAN models are also initialized, which may serve to complement or enhance the primary models. The initialization comprises using a range of different network topologies for each model. Topologies refer to the overall structure of the neural network, including the arrangement and types of layers such as convolutional or fully connected layers. By starting with multiple topologies, the computing system 102 can explore different network structures to determine which architecture works best for the task at hand.

Additionally, each GAN model is initialized with various module configurations. Modules are the components or building blocks within the network, such as specific types of layers or activation functions. Different configurations might include variations in the size and type of these modules or adjustments to hyperparameters like learning rates. This approach allows for extensive experimentation with different combinations to optimize the performance of the GAN models. By employing diverse topologies and configurations, the computing system 102 aims to identify the most effective setup for generating high-quality, realistic data.

In an exemplary embodiment, the computing system 102 may reconstruct the detected one or more occluded regions in the 3D multimedia data corresponding to one or more scenes, using the identified one or more optimal GAN models. The reconstruction involves the process of creating or filling in previously obscured or missing parts of the 3D multimedia data corresponding to the one or more scenes. When certain regions in the 3D data are blocked or hidden due to occlusion-where other objects or structures obstruct the view-these areas can result in incomplete or unclear representations. To address these gaps, the computing system 102 utilizes the GANs, that have been optimized for this specific task. The GAN models, identified as the most effective for this purpose, generate synthetic data that fills in the occluded regions. These models have been trained to understand and replicate the patterns and characteristics of the existing 3D data. By applying these optimal GAN models, the system reconstructs the obscured areas, effectively producing a more complete and accurate representation of the 3D scene. This process ensures that the newly generated data seamlessly integrates with the existing data, enhancing the overall quality and fidelity of the 3D multimedia data.

Further, the computing system 102 may superimpose the reconstructed 3D multimedia data with the one or more scenes, to generate an augmented 3D visualization of the one or more scenes. Furthermore, the computing system 102 may output the augmented 3D visualization of the one or more scenes on a user interface associated with an electronic device 110.

FIG. 2 is a block diagram of a computing system 102 such as those shown in FIG. 1, depicting various components to implement embodiments of the present invention. In FIG. 2, the computing system 102 comprises a processor(s) 202, an accessible memory 204, a communication interface 206, a network interface 208, an input/output unit 210, and a bus 212.

The processor(s) 202, as used herein, means any type of computational circuit, such as, but not limited to, a microprocessor unit, microcontroller, complex instruction set computing microprocessor unit, reduced instruction set computing microprocessor unit, very long instruction word microprocessor unit, explicitly parallel instruction computing microprocessor unit, graphics processing unit, digital signal processing unit, or any other type of processing circuit. The processor(s) 202 may also include embedded controllers, such as generic or programmable logic devices or arrays, application specific integrated circuits, single-chip computers, and the like.

The memory 204 may be non-transitory volatile memory and non-volatile memory. The memory 204 may be coupled for communication with the processor(s) 202, such as being a computer-readable storage medium. The processor(s) 202 may execute machine-readable instructions and/or source code stored in the memory 204. A variety of machine-readable instructions may be stored in and accessed from the memory 204. The memory 204 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like. In the present embodiment, the memory 204 comprises an occlusion management module 214 stored in the form of machine-readable instructions on any of the above-mentioned storage media and may be in communication with and executed by the processor(s) 202.

When executed by the processor(s) 202, the occlusion management module 214 causes the processor(s) 202 to manage occlusions in one or more scenes rendered in a computer-simulated environment 120. The anomaly management module 214 causes the processor(s) 202 to receive a 3D multimedia data corresponding to one or more scenes to be rendered in the computer-simulated environment 120, from one or more data acquisition devices 104. The received 3D multimedia data comprises a point cloud input data associated with the computer-simulated environment 120. Further, the one or more scenes comprise one or more entities 106 in a real-world environment. Further, the anomaly management module 214 may cause the processor(s) 202 to detect one or more occluded regions in the one or more scenes, based on the received 3D multimedia data, using one or more Neural Networks (NNs). In an exemplary embodiment, the anomaly management module 214 may cause the processor(s) 202 to determine one or more model optimization parameters, based on the detected one or more occluded regions in the one or more scenes. The one or more optimization parameters comprise at least one of a population size of models, a maximum number of generation of models, network training parameters, a rate of change of genotypes, a speciation threshold, an elite fraction, a fitness function, a topology mutation rate, a module mutation rate, a node complexity rate, a network selection strategy, and the like.

In an exemplary embodiment, the anomaly management module 214 may cause the processor(s) 202 to generate a plurality of primary generative adversarial network (GAN) models corresponding to the detected one or more occluded regions in the one or more scenes, based on the determined one or more model optimization parameters. The plurality of primary GAN models comprises at least one of a Co-evolutionary Deep NeuroEvolution of Augmenting Topologies Generative Adversarial Network (CoDeep NEAT GAN) model, a Co-evolutionary Deep Generative Adversarial Network (CoDeep GAN) model, a NeuroEvolution of Augmenting Topologies Generative Adversarial Network (NEAT GAN) model, a Co-evolutionary Generative Adversarial Network (Co-GAN) model, and a base models of Generative Adversarial Network (base-GAN) model.

Further, the anomaly management module 214 may cause the processor(s) 202 to evaluate a fitness value of the generated plurality of primary GAN models, by creating an occluded data for the point cloud input data using the generated plurality of primary GAN models. Furthermore, the anomaly management module 214 may cause the processor(s) 202 to iteratively generate a plurality of secondary GAN models, until at least one criteria is satisfied. At least one criteria comprises at least one of reaching a maximum number of target GAN models and reaching one or more target fitness values. The plurality of secondary GAN models comprises at least one of a Co-evolutionary Deep NeuroEvolution of Augmenting Topologies Generative Adversarial Network (CoDeep NEAT GAN) model, a Co-evolutionary Deep Generative Adversarial Network (CoDeep GAN) model, a NeuroEvolution of Augmenting Topologies Generative Adversarial Network (NEAT GAN) model, a Co-evolutionary Generative Adversarial Network (Co-GAN) model, and a base models of Generative Adversarial Network (base-GAN) model.

Additionally, the anomaly management module 214 may cause the processor(s) 202 to identify one or more optimal GAN models from the iteratively generated plurality of secondary GAN models, based on the evaluated fitness value. Each of the plurality of primary GAN models, and each of the plurality of secondary GAN models comprise a generator sub-model and a discriminator sub-model. Each of the plurality of primary GAN models and the secondary GAN models are initialized with a plurality of topologies and a plurality of module configurations.

In an exemplary embodiment, the anomaly management module 214 may cause the processor(s) 202 to reconstruct the detected one or more occluded regions in the 3D multimedia data corresponding to one or more scenes, using the identified one or more optimal GAN models. Further, the anomaly management module 214 may cause the processor(s) 202 to superimpose the reconstructed 3D multimedia data with the one or more scenes, to generate an augmented 3D visualization of the one or more scenes. Furthermore, the anomaly management module 214 may cause the processor(s) 202 to output the augmented 3D visualization of the one or more scenes on a user interface associated with an electronic device 110.

In another exemplary embodiment, for identifying the one or more optimal GAN models from the iteratively generated plurality of secondary GAN models, the anomaly management module 214 may cause the processor(s) 202 to determine a performance level of each of the generated plurality of secondary GAN models, based on the evaluated fitness value. Further, the anomaly management module 214 may cause the processor(s) 202 to perform at least one of a crossover operation, a speciation operation, and a mutation operation to the generated plurality of secondary GAN models, based on the determined performance level. The crossover operation comprises combining a structural information of the primary GAN models and the plurality of secondary GAN models. Further, the speciation operation comprises segmenting the plurality of primary GAN models and the plurality of secondary GAN models into one or more distinct groups based on a topological similarity. Furthermore, the mutation operation comprises modifying the plurality of primary GAN models and the plurality of secondary GAN models.

The crossover operation in, for example, evolving GAN models, a crossover operation involves combining parts of two or more existing GAN models to create a new model. Specifically, the generator or discriminator components of different GAN models are crossed over by mixing their architectures or parameters. This process is similar to genetic crossover in biological reproduction, where offspring inherit traits from both parents. The goal is to produce a new GAN model that inherits the strengths of respective parent models, potentially leading to improved performance. Further, in the speciation operation, the speciation refers to the process of grouping GAN models into different species or subpopulations based on respective characteristics or performance. By grouping, the evolutionary process can focus on developing and refining specific traits within each species, allowing for more diverse and specialized models to emerge. Speciation helps maintain diversity within the population of GAN models, preventing premature convergence to a single solution and encouraging the exploration of multiple promising approaches. Furthermore, in the mutation operation, the mutation introduces random changes to the architecture or parameters of a GAN model.

This operation mimics genetic mutation in biological organisms, where small, random alterations occur. In the GANs, mutation may involve modifying the structure of the neural network, such as adding or removing layers, changing activation functions, or adjusting hyperparameters. The purpose of mutation is to explore new possibilities that might lead to better-performing models, especially in situations where existing models have reached a plateau in performance.

The application of the crossover operation, the speciation operation, and the mutation operation is guided by the performance level of the GAN models. This means that models that perform well may be selected for crossover to combine their strengths, while those with unique traits may undergo speciation to explore further. Models that perform less effectively might be subjected to mutation to introduce new variations that could enhance their capabilities.

Additionally, the anomaly management module 214 may cause the processor(s) 202 to generate the plurality of secondary GAN models, based on the performed at least one of the crossover operation, the speciation operation, and the mutation operation. Each of the plurality of secondary GAN models comprise one or more genetic variations.

The different GAN models may be modified or evolved through slight alterations in their structure or parameters. The genetic variations draw an analogy from biological evolution, where genetic diversity arises from differences in deoxyribonucleic acid (DNA) among individuals. In the GANs, genetic variations refer to the changes made to the architecture of the neural networks (NNs) or parameters. These variations can include modifications such as altering the number of layers in the network, changing the types of activation functions, adjusting learning rates, or even introducing new connections between neurons. Each secondary GAN model has undergone one or more of these changes, resulting in a model that is slightly different from others in the population. These variations are introduced deliberately to explore different potential improvements in the model's performance. By creating multiple versions of the GANs with different variations, the computing system 102 can test which modifications lead to better results. The purpose of incorporating genetic variations in secondary GAN models is to simulate an evolutionary process where, through the exploration of different configurations and structures, more effective models emerge. Over time, these genetic variations help identify the optimal configurations, leading to the development of highly optimized GANs for specific tasks.

In another exemplary embodiment, the anomaly management module 214 may cause the processor(s) 202 to modify the generated plurality of secondary GAN models, by mutating a plurality of topologies and a plurality of module configurations associated with the generated plurality of secondary GAN models. The anomaly management module 214 may detect and address anomalies, which are unusual or unexpected patterns in the 3D multimedia data that could indicate errors, outliers, or novel situations. Improving the ability of the GAN models to handle such anomalies, the anomaly management module 214 instructs the processors 202 to make specific alterations to these models. The processors 202 modify the generated secondary GAN models through a process known as mutation. Mutation involves making deliberate changes to the topology of the neural network, which is essentially the architecture or structure of the network. This topology comprises the number of layers, the connections between neurons, and the overall arrangement of the components of the network. By mutating these topologies, the system 102 explores different structural variations, aiming to find configurations that enhance the effectiveness of GAN models in dealing with anomalies. In addition to altering the topology, the mutation process also involves modifying the configurations of various modules within the GAN models. Modules are the individual components or building blocks of the network, such as layers, activation functions, and regularization techniques. The system may adjust parameters such as the size of layers, the types of activation functions used, or the learning rates. These changes are designed to optimize the models for better performance in anomaly detection and management.

Further, the anomaly management module 214 may cause the processor(s) 202 to update the one or more model optimization parameters to generate the plurality of secondary GAN models, using a plurality of tertiary GAN networks. The plurality of tertiary GAN networks may include a pattern generation-based GAN networks. The pattern generating networks are specialized neural networks designed to create or generate patterns across various forms of data, such as visual images, auditory sequences, or other sensory information. For example, pattern generating networks may be used in computer graphics to generate textures and designs, in music composition to create melodies and rhythms, and in scientific simulations to replicate natural patterns found in biological or physical systems. The generator creates patterns, while the discriminator evaluates a realism of the patterns. Through this adversarial process, the generator becomes increasingly skilled at producing authentic-looking patterns. Autoencoders, particularly variational autoencoders (VAEs), are another approach, capable of generating new patterns by learning to compress and then reconstruct data. Recurrent Neural Networks (RNNs), especially those enhanced with long short-term memory (LSTM) units, are well-suited for generating sequential patterns, such as music or time-series data. Convolutional Neural Networks (CNNs) can also be employed, especially in generating spatially organized patterns like images and textures. The process of pattern generation typically begins with training the network on a large dataset of examples that exhibit the desired patterns. The network learns to capture the underlying rules and structures that define these patterns. For instance, in a GAN, the generator starts with random noise and iteratively transforms it into a pattern that the discriminator struggles to distinguish from real examples in the training data. As training progresses, the generator becomes adept at producing patterns that are both realistic and varied.

In an exemplary embodiment, the anomaly management module 214 may cause the processor(s) 202 to evaluate a secondary fitness value of the generated plurality of secondary GAN models, using one or more predefined fitness rules, based on the updated one or more model optimization parameters. Additionally, the anomaly management module 214 may cause the processor(s) 202 to identify the one or more optimal GAN models from the generated plurality of secondary GAN models, based on the evaluation. Further, the anomaly management module 214 may cause the processor(s) 202 to fine-tune the identified one or more optimal GAN models, using at least one of a gradient descent technique and a plurality of optimization techniques. Gradient descent is a popular method that iteratively adjusts the weights of the model to minimize the error between the predicted and actual outputs, thereby improving accuracy. Additionally, the use of various optimization techniques allows for more sophisticated adjustments, ensuring that the GAN models become more efficient and effective in handling complex tasks, such as detecting and managing anomalies in data.

In yet another exemplary embodiment, the anomaly management module 214 may cause the processor(s) 202 to update the one or more model optimization parameters to generate the plurality of secondary GAN models, using the plurality of tertiary GAN networks. Further, the anomaly management module 214 may cause the processor(s) 202 to generate optimized weight initialization values for the plurality of secondary GAN models, using the plurality of tertiary GAN networks. The optimized weight initialization values for the plurality of secondary GAN models are based on mutating, during each epoch, a similar tertiary GAN network.

The process of optimizing weight initialization values for a plurality of secondary GAN models involves a technique where these values are derived from mutating a similar tertiary GAN network during each epoch of training. Essentially, as the tertiary GAN network undergoes training, weights of the GAN network are periodically adjusted through mutations-small, random changes aimed at exploring new configurations that might improve performance. These mutated weights serve as a basis for initializing the weights of the secondary GAN models, ensuring that the GAN models start from a well-informed, potentially more effective state. By leveraging the evolving knowledge from the tertiary GAN, the secondary models are better positioned to achieve optimal performance, as the GAN models benefit from the continual refinement occurring in the tertiary network.

In yet another exemplary embodiment, for generating the plurality of the primary GAN models, the anomaly management module 214 may cause the processor(s) 202 to iteratively train the generated plurality of primary GAN models, using a historical point cloud data. Further, the anomaly management module 214 may cause the processor(s) 202 to validate the trained plurality of primary GAN models on a test dataset comprising a plurality of occlusion scenarios. Furthermore, the anomaly management module 214 may cause the processor(s) 202 to fine-tune the trained plurality of primary GAN models, based on results of the validation. Fine-tuning comprises performing hyperparameter optimization of the point cloud data. The hyperparameter optimization comprises at least one of adjusting learning rates, batch sizes, and regularization techniques.

In yet another exemplary embodiment, for receiving the 3D multimedia data corresponding to the one or more scenes in the computer-simulated environment 120, the anomaly management module 214 may cause the processor(s) 202 to generate a synchronized 3D multimedia data by synchronizing the 3D multimedia data received from the one or more data acquisition devices 104, with a pre-defined 3D multimedia data. One or more data acquisition devices 104 comprises at least one of a Light Detection and Ranging (LIDAR) sensor, a Radio Detection and Ranging (RADAR) sensor, a Red Green Blue (RGB) depth sensor, stereo camera, a camera, and the like. Further, the anomaly management module 214 may cause the processor(s) 202 to pre-process the synchronized 3D multimedia data. Preprocessing the synchronized 3D multimedia data comprises filtering a noise data from the synchronized 3D multimedia data. Furthermore, the anomaly management module 214 may cause the processor(s) 202 to filter one or more outlier data points from the synchronized 3D multimedia data, using at least one of a distance-based filtering technique and a range-based filtering technique. One or more outlier data points correspond to a value exceeding at least one of a pre-defined distance and a pre-defined range. Additionally, the anomaly management module 214 may cause the processor(s) 202 to generate a voxel grid visualization data by converting the synchronized 3D multimedia data into the voxel grid visualization data. The voxel (short for "volume elements") grid visualization is a method for representing three-dimensional (3D) data by dividing the space into small, discrete units called voxels, which are the 3D equivalent of pixels in a 2D image. Each voxel occupies a specific volume in the 3D space and can store detailed information about that region, such as colour, density, or material properties. This technique allows for a structured and detailed representation of complex 3D objects or scenes, making it particularly useful in fields like computer graphics, medical imaging, and scientific simulations. By visualizing data as a grid of voxels, intricate 3D structures can be rendered and analysed with precision, enabling a clearer understanding of the underlying spatial patterns and characteristics.

Further, the anomaly management module 214 may cause the processor(s) 202 to down-sample the generated voxel grid visualization data to optimize a density of the one or more outlier data points in the received point cloud input data. Furthermore, the anomaly management module 214 may cause the processor(s) 202 to store, in a database 112, the pre-processed point cloud input data represented in a three-dimensional (3D) space, based on the down-sampling of the voxel grid visualization data.

In yet another exemplary embodiment, the anomaly management module 214 may cause the processor(s) 202 to retrieve the pre-processed point cloud input data represented in the 3D space, from the database 112. Further, the anomaly management module 214 may cause the processor(s) 202 to generate one or more feature maps corresponding to the pre-processed point cloud input data by performing a region of interest (RoI) pooling on the pre-processed point cloud input data. Furthermore, the anomaly management module 214 may cause the processor(s) 202 to detect one or more candidate objects within the RoI corresponding to the generated one or more feature maps, using one or more Convolutional Neural Networks (CNNs). Additionally, the anomaly management module 214 may cause the processor(s) 202 to suppress at least one of one or more overlapping detections and one or more redundant detections in the detected one or more candidate objects within the RoI, using a non-maximum suppression technique. Further, the anomaly management module 214 may cause the processor(s) 202 to segment a set of objects in the pre-processed point cloud input data, based on the suppressed at least one of the one or more overlapping detections and the one or more redundant detections in the detected candidate objects.

In yet another exemplary embodiment, for detecting one or more occluded regions in the one or more scenes, the anomaly management module 214 may cause the processor(s) 202 to obtain a set of segmented objects in the one or more scenes, based on preprocessing the 3D multimedia data. Further, the anomaly management module 214 may cause the processor(s) 202 to generate one or more hypotheses data corresponding to one or more potential occlusions between the set of segmented objects. Furthermore, the anomaly management module 214 may cause the processor(s) 202 to detect one or more occluded regions in the one or more scenes, based on the generated one or more hypotheses data and one or more feature maps. Additionally, the anomaly management module 214 may cause the processor(s) 202 to estimate a visibility of each of the set of segmented objects, based on detecting the one or more occluded regions in the one or more scenes. Further, the anomaly management module 214 may cause the processor(s) 202 to analyzee one or more depth discontinuity levels between the set of segmented objects, based on the estimated visibility. Additionally, the anomaly management module 214 may cause the processor(s) 202 to assess a possibility of occlusion in the one or more occluded regions for each of the set of segmented objects, based on the analyzed one or more depth discontinuity levels using probabilistic models. Further, the anomaly management module 214 may cause the processor(s) 202 to determine the one or more occluded regions based on results of assessment.

The input-output unit 210 may include input devices a keypad, touch-sensitive display, camera (such as a camera receiving gesture-based inputs), and the like, capable of receiving one or more input signals, such as user commands to process equipment data. Also, the input-output unit 210 may be a display unit for displaying a graphical user interface which visualizes the multimodal data and also displays the status information associated with each set of actions performed on the multimodal data. The set of actions may include data entry, data modification or data display. The bus 212 acts as interconnect between the processor 202, the memory 204, and the input-output unit 210.

Those of ordinary skilled in the art will appreciate that the hardware depicted in FIG. 2 may vary for particular implementations. For example, other peripheral devices such as an optical disk drive and the like, Local Area Network (LAN), Wide Area Network (WAN), Wireless (e.g., Wi-Fi) adapter, graphics adapter, disk controller, input/output (I/O) adapter also may be used in addition or in place of the hardware depicted. The depicted example is provided for the purpose of explanation only and is not meant to imply architectural limitations with respect to the present disclosure.

Those skilled in the art will recognize that, for simplicity and clarity, the full structure and operation of all data processing systems suitable for use with the present disclosure is not being depicted or described herein. Instead, only so much of a computing system 102 as is unique to the present disclosure or necessary for an understanding of the present disclosure is depicted and described. The remainder of the construction and operation of the computing system 102 may conform to any of the various current implementation and practices known in the art.

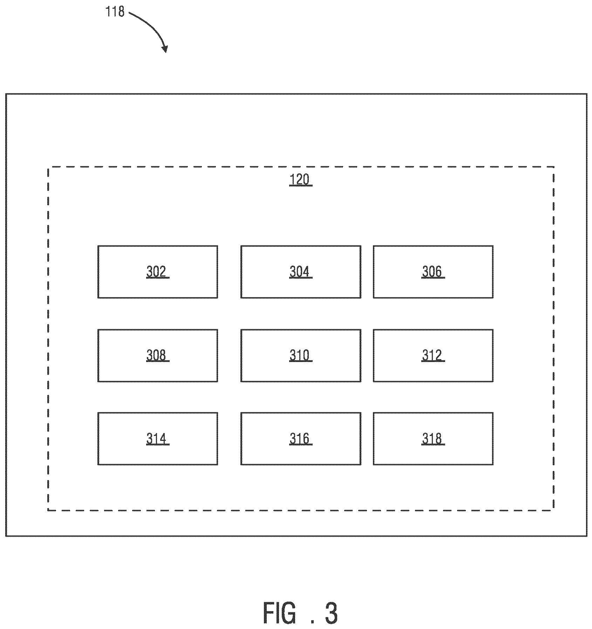

FIG. 3 is a block diagram of an occlusion management module 214, such as those shown in FIGs. 1 and 2, capable of managing occlusions in one or more scenes rendered in a computer-simulated environment 120, according to the embodiment of the present invention. The computer-simulated environment 120 may include at least one of a metaverse environment, a virtual environment, an augment environment, a computing environment, a 3D environment, a point cloud environment, and the like. In FIG. 3, the occlusion management module 214 comprises a data receiving module 302, an occluded regions detecting module 304, a model optimization parameters determining module 306, a generative adversarial network (GAN) models generating module 308, a fitness value evaluating module 310, an optimal GAN models identifying module 312, a scene reconstructing module 314, a multimedia data superimposing module 316, and an augmented 3D visualization outputting module 318.

In an exemplary embodiment, the data receiving module 302 may be configured to receive a three-dimensional (3D) multimedia data corresponding to one or more scenes to be rendered in the computer-simulated environment 120, from the one or more data acquisition devices 104. Examples of the 3D multimedia data include 3D models, 3D animations, virtual reality/augmented reality (VR/AR) environments, metaverse data, 3D renderings, 3D imaging, and 3D prototypes. Further, the received 3D multimedia data comprises a point cloud input data associated with the computer-simulated environment 120. Further, the one or more scenes comprise one or more entities in a real-world environment associated with the technical installation 122.

Further, the occluded regions detecting module 304 may be configured to detect one or more occluded regions in the one or more scenes, based on the received 3D multimedia data, using one or more Neural Networks (NNs). The one or more occluded regions can occur in various forms, such as self-occlusion, where parts of an object block other parts of the same object, or object occlusion, where one object obstructs another within a scene. Environmental occlusion is common in both natural and urban settings, where trees, buildings, or other structures block certain areas from view. Shadowed occlusion can occur when shadows cast by objects obscure details, while dynamic occlusion involves moving objects temporarily blocking the view of other elements in a scene. Additionally, partial occlusion happens when only part of an object is hidden, adding complexity to the interpretation of the scene. Further, the NNs may include feedforward neural networks (FNNs), convolutional neural networks (CNNs), recurrent neural networks (RNNs), long short-term memory networks (LSTMs), generative adversarial networks (GANs), autoencoders, radial basis function networks (RBFNs), modular neural networks (MNNs), transformers, and the like.

In an exemplary embodiment, the model optimization parameters determining module 306 may be configured to determine one or more model optimization parameters, based on the detected one or more occluded regions in the one or more scenes. The one or more optimization parameters comprise at least one of a population size of models, a maximum number of generation of models, network training parameters, a rate of change of genotypes, a speciation threshold, an elite fraction, a fitness function, a topology mutation rate, a module mutation rate, a node complexity rate, a network selection strategy, and the like.

In an exemplary embodiment, the generative adversarial network (GAN) models generating module 308 may be configured to generate a plurality of primary generative adversarial network (GAN) models corresponding to the detected one or more occluded regions in the one or more scenes, based on the determined one or more model optimization parameters. Generative Adversarial Networks (GANs) are a class of neural network architectures designed for generating synthetic data that resembles real data. GANs consist of two distinct models such as a generator and a discriminator. The generator creates synthetic data, aiming to generate outputs that closely mimic the real data distribution. The generator generates data that is indistinguishable from actual data samples. The discriminator, on the other hand, evaluates the data produced by the generator and determines whether it is real (from the actual dataset) or fake (generated by the generator). These two models are trained together in an adversarial process. The ability of the generator is improved to create realistic data in response to the feedback from the discriminator, while the discriminator enhances its capability to differentiate between real and synthetic data. This iterative process continues until the generator produces data that the discriminator can no longer reliably distinguish from real data. The applications of GANs include image synthesis, style transfer, data augmentation, and even creating realistic simulations for training machine learning models. The GANs generate high-quality, diverse samples that capture the underlying patterns of the real data.

The plurality of primary GAN models comprises at least one of a Co-evolutionary Deep NeuroEvolution of Augmenting Topologies Generative Adversarial Network (CoDeep NEAT GAN) model, a Co-evolutionary Deep Generative Adversarial Network (CoDeep GAN) model, a NeuroEvolution of Augmenting Topologies Generative Adversarial Network (NEAT GAN) model, a Co-evolutionary Generative Adversarial Network (Co-GAN) model, and a base models of Generative Adversarial Network (base-GAN) model. The CoDeep NEAT GAN model may be a framework that integrates concepts from evolutionary algorithms with deep learning and the GANs. The CoDeep NEAT GAN model builds on the NeuroEvolution of Augmenting Topologies (NEAT) algorithm, which is used to evolve neural network architectures through a process of genetic algorithms.

Further, the fitness value evaluating module 310 may be configured to evaluate a fitness value of the generated plurality of primary GAN models, by creating an occluded data for the point cloud input data using the generated plurality of primary GAN models. The fitness value is assessing performance of the GAN through various evaluation metrics and loss functions that reflect the effectiveness of the generator and discriminator. The performance of the generator is gauged by how well it can produce data that convincingly mimics real data, while the performance discriminator is measured by respective ability to accurately distinguish between real and generated samples.

Furthermore, the generative adversarial network (GAN) models generating module 308 may be configured to iteratively generate a plurality of secondary GAN models, until at least one criteria is satisfied. At least one criteria comprises at least one of reaching a maximum number of target GAN models and reaching one or more target fitness values. The plurality of secondary GAN models comprises at least one of a Co-evolutionary Deep NeuroEvolution of Augmenting Topologies Generative Adversarial Network (CoDeep NEAT GAN) model, a Co-evolutionary Deep Generative Adversarial Network (CoDeep GAN) model, a NeuroEvolution of Augmenting Topologies Generative Adversarial Network (NEAT GAN) model, a Co-evolutionary Generative Adversarial Network (Co-GAN) model, a base models of Generative Adversarial Network (base-GAN) model, and the like.

Additionally, the optimal GAN models identifying module 312 may be configured to identify one or more optimal GAN models from the iteratively generated plurality of secondary GAN models, based on the evaluated fitness value. Each of the plurality of primary GAN models, and each of the plurality of secondary GAN models comprise a generator sub-model and a discriminator sub-model. Each of the plurality of primary GAN models and the secondary GAN models are initialized with a plurality of topologies and a plurality of module configurations.

In an exemplary embodiment, the scene reconstructing module 314 may be configured to reconstruct the detected one or more occluded regions in the 3D multimedia data corresponding to one or more scenes, using the identified one or more optimal GAN models. The reconstruction involves the process of creating or filling in previously obscured or missing parts of the 3D multimedia data corresponding to the one or more scenes. When certain regions in the 3D data are blocked or hidden due to occlusion-where other objects or structures obstruct the view-these areas can result in incomplete or unclear representations. To address these gaps, the computing system 102 utilizes the GANs, that have been optimized for this specific task. The GAN models, identified as the most effective for this purpose, generate synthetic data that fills in the occluded regions. These models have been trained to understand and replicate the patterns and characteristics of the existing 3D data. By applying these optimal GAN models, the system reconstructs the obscured areas, effectively producing a more complete and accurate representation of the 3D scene. This process ensures that the newly generated data seamlessly integrates with the existing data, enhancing the overall quality and fidelity of the 3D multimedia data.

Further, the multimedia data superimposing module 316 may be configured to superimpose the reconstructed 3D multimedia data with the one or more scenes, to generate an augmented 3D visualization of the one or more scenes. Furthermore, the augmented 3D visualization outputting module 318 may be configured to output the augmented 3D visualization of the one or more scenes on a user interface associated with an electronic device 110.

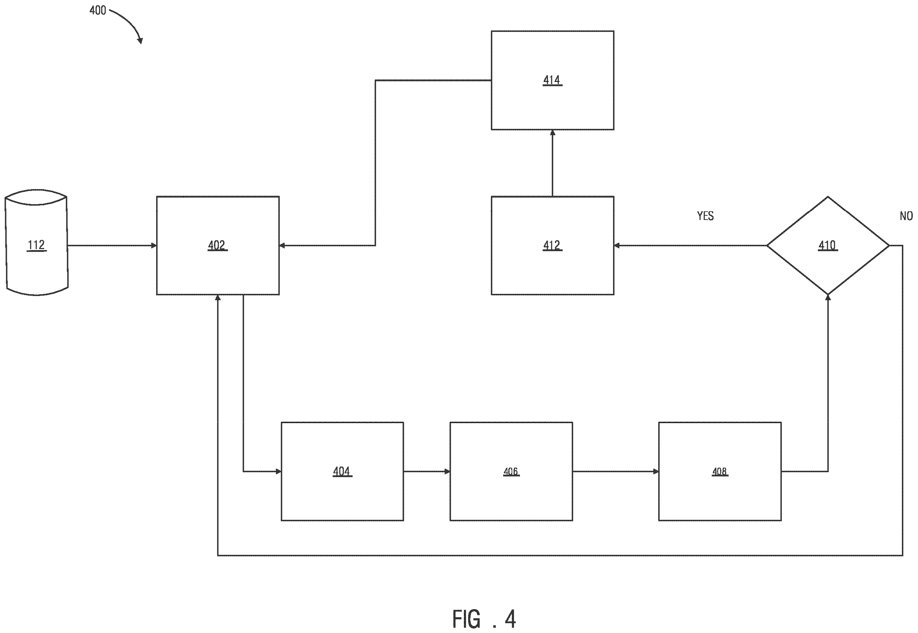

FIG. 4 is a flow diagram depicting an exemplary method 400 of detecting and correcting occlusions using an evolutionary GAN model, and integrating the corrected data with the original 3D model, according to an embodiment of the present invention. At step 402, the method 400 comprises receiving, by the processor 202, an initial input of a scanned 3D image or a factory-fitted point cloud from the database 112. A point cloud is a collection of data points defined in a three-dimensional coordinate system, usually captured by 3D scanners. These points represent the external surface of an object or a scene, providing a detailed spatial representation.

At step 404, the method 400 comprises pre-processing, by the processor 202, the received initial input of the scanned 3D image or the factory-fitted point cloud from the database 112. Data pre-processing involves cleaning and preparing the data for further analysis. This may include noise reduction, normalization, and the removal of irrelevant or redundant data. The goal is to ensure that the data is in the best possible condition for subsequent processing, leading to more accurate and reliable results.

At step 406, the method 400 comprises detecting, by the processor 202, one or more 3D objects in the pre-processed data by identifying and locating objects within the 3D scene. Object detection in 3D involves analysing the spatial relationships and characteristics of data points to determine the presence and boundaries of objects. This step is essential for understanding the structure and layout of the scene, which is necessary for accurate modelling and analysis.

At step 408, the method 400 comprises determining, by the processor 202, after detecting the one or more objects, occlusions-areas in the scene where objects or parts of objects are hidden from view blocked by other objects. Occlusion detection identifies these regions, which are critical challenges in 3D modelling leading to incomplete or distorted representations of the scene.

At step 410, the method 400 comprises determining, by the processor 202, if occlusions are detected. If the occlusions are detected, at step 412 the method 400 comprises reconstructing, by the processor 202, 3D missing data using an evolutionary-based Generative Adversarial Network (GAN) model, specifically CoDeepNEAT-GAN, based on the detected occlusions areas. GANs are a class of machine learning frameworks where two neural networks, a generator and a discriminator, work together to produce high-quality data that mimics the characteristics of the original dataset. CoDeepNEAT-GAN combines the principles of NeuroEvolution of Augmenting Topologies (NEAT) with GANs, allowing the system to evolve neural network architectures that are particularly suited for complex tasks like 3D reconstruction. This model generates corrected or enhanced 3D representations by filling in the missing information in the occluded regions. If the occlusions are not detected, display the detected one or more objects via the display interface of the electronic device 110.

At step 414, the method 400 comprises integrating, by the processor 202, the corrected 3D data, generated by the GAN model, with the original 3D model. Integration involves combining the newly generated data with the existing model to create a seamless and coherent 3D representation. This step ensures that the final output accurately reflects the complete scene, including the previously occluded areas that have now been reconstructed.

At step 414, the method 400 comprises outputting, by the processor 202, an enhanced 3D representation of the scene on a display interface of the electronic device 110. This output comprises the original data, along with the corrections made to address occlusions. The result is a more accurate and complete 3D model that better represents the real-world scene, providing improved utility for applications such as visualization, analysis, and simulation.

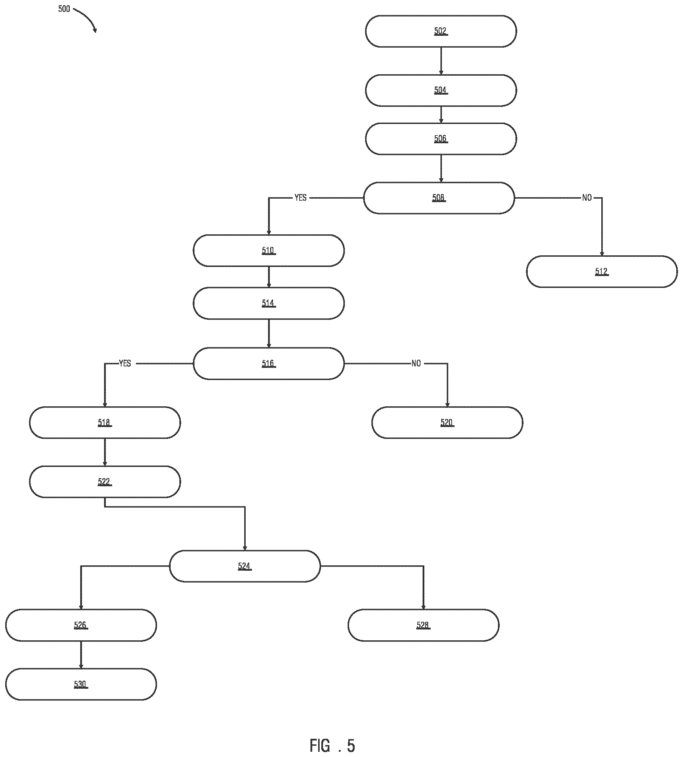

FIG. 5 is a flow diagram depicting an exemplary method 500 of processing 3D data, and refinement of the 3D model to handle occlusions, according to the embodiment of the present invention. At step 502, the method 500 comprises extracting or receiving, by the processor 202, 3D data from various sources such as LiDAR, radio frequency identity (RFID) readers, temperature sensors, pressure sensors, scanners, sensors, camera, and the like. For example, the sensors continuously collect wide range of data, which may be related to factory operations such as machinery performance, inventory levels, environmental conditions, worker activities, and the like. The data is captured in real-time to provide comprehensive overview of status and activities of the factory setup. The scanned 3D data is verified against a known reference to ensure the accuracy of the scanned 3D data. If a reference is available, the data is validated to identify any discrepancies or errors.

At step 504, the method 500 comprises pre-processing, by the processor 202, the 3D data. Pre-processing comprises filtering or correcting to remove noise and address missing or inaccurate information, to enhance the quality of the dataset.

At step 506, the method 500 comprises identifying, by the processor 202, occlusions within the 3D data-areas that are hidden or obscured from view by other objects. Algorithms are used to detect occlusion events, identifying instances where objects partially or completely, block the view of sensors. Occlusion detection is crucial for ensuring data completeness and accuracy, as the occlusions can impact the quality of the data. Further, the method comprises analysing and categorizing the detected occlusions based on a type occlusion and impact on the overall scene. Further, the method comprises applying object recognition algorithms to the 3D data to identify and label various objects within the scene. The method comprises classifying the recognized objects by type, such as static (fixed) or dynamic (moving). Further, the method comprises determining, if any dynamic (moving) objects are present in the scene. Furthermore, the method comprises tracking the movement and position of any dynamic objects over time to accurately capture their behaviour within the 3D scene.

At step 508, the method 500 comprises determining, by the processor 202, if there are occlusions regions. If the occlusion regions are detected, then at step 510, the method 500 comprises initiating, by the processor 202, occlusion handling to address the detected occlusion regions. If the occlusion regions are not detected, then at step 512, the method 500 comprises outputting, by the processor 202, the clear factory data on a display interface of the electronic device 110.

At step 514, the method 500 comprises generating, by the processor 202, evolutionary GAN (CoDeep-GAN) for occlusion management. At step 516, the method 500 comprises determining, by the processor 202, if a historical factory floor point cloud data is available for training the generated evolutionary GAN (CoDeep-GAN) for occlusion management.

At step 518, the method 500 comprises training, by the processor 202, the generated evolutionary GAN (CoDeep-GAN) for occlusion management, if the historical factory floor point cloud data is available. The historical factory floor point cloud data comprises historical factory layouts, machinery configurations, object positions, and the like. The GAN models effectively learns to recognize occlusions and patterns of missing data.

At step 520, the method 500 comprises terminating, by the processor 202, the processing of the 3D data, if the historical factory floor point cloud data is not available. At step 522, the method 500 comprises validating, by the processor 202, the trained GAN models on a test dataset. The test dataset comprises diverse data range of factory floor scenarios. The method comprises checking the 3D model for completeness, ensuring no sections or critical data are missing.

At step 524, the method 500 comprises generating, by the processor 202, the occlusion regions form the factory point cloud data as missing data, using the trained GAN models. If the trained GAN models generate the missing data, at step 526, the method 500 comprises utilizing, by the processor 202, the trained GAN model for missing data estimation. The processor 202 validates the final model against the initial requirements to ensure it meets the desired criteria.

If the trained GAN models do not generate the missing data, at step 528, the method 500 comprises fine-tuning, by the processor 202, the GAN models, using the test dataset. The processor 202 assesses whether the model requires further refinement or if the current level of detail and accuracy is sufficient. The processor 202 refines the 3D model by incorporating results from object detection, enhancing the accuracy of the representation.

At step 530, the method 500 comprises augmenting, by the processor 202, the occluded regions in the point cloud data, resulting in a more complete 3D model, based on the generated data from the GAN models. The reconstructed data is integrated with the original 3D model to form a seamless and enhanced 3D representation.

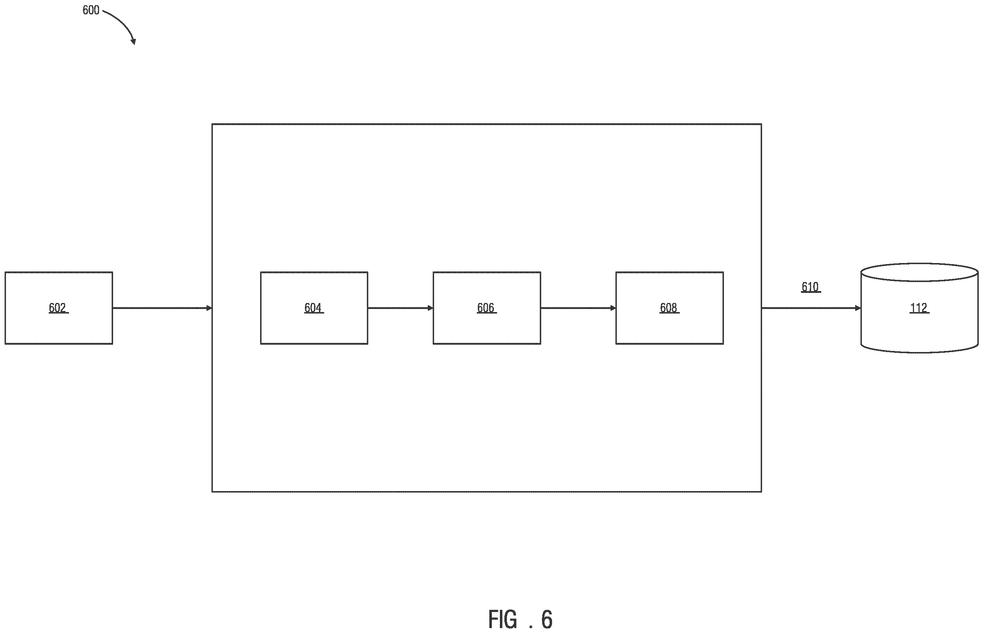

FIG. 6 is a flow diagram depicting an exemplary method 600 of acquiring three-dimensional (3D) point cloud data, according to the embodiment of the present invention. At step 602, the method 600 comprises detecting, by the processor 202, one or more scenes by one or more sensors. At step 604, the method 600 comprises capturing, by the processor 202, the one or more scenes via the one or more sensors. The choice of sensors depends on the specific application and desired level of detail. For example, light detection and ranging (LiDAR), radio detection and ranging (Radar), stereo cameras, sensor placement, and the like.

At step 606, the method 600 comprises synchronizing, by the processor 202, the captured sensor data. Each sensor records data with a timestamp. These timestamps are compared and adjusted to ensure that data from different sensors corresponds to the same moment in time. In some cases, specialized hardware or synchronization protocols are used to guarantee precise timing alignment.

At step 608, the method 600 comprises pre-processing, by the processor 202, the synchronized data. The primary data preprocessing comprises noise removal (outliers) by statistical methods, in which outliers can be identified based on statistical measures like standard deviation or z-scores. A spatial filtering comprises algorithms that can detect points that are significantly different from their neighbours in terms of position or intensity. Further, distance-range based filtering comprises region of interest (ROI), in which a specific area of interest is defined, and only points within that region are retained. Minimum and maximum distances include points outside of a certain distance range might be discarded to focus on relevant objects. Verify that the data is consistent with known properties of the environment (e.g., ground plane, object shapes). Identify and correct errors or inconsistencies in the data. The processor 202 generates a voxel grid, by dividing the point cloud into voxels (3D grid cells), and only one point per voxel is retained, reducing the number of points. The processor 202 down samples a random subset of points is selected to reduce the point cloud size.

At step 610, the method 600 comprises storing, by the processor 202, the pre-processed data in the database 112.

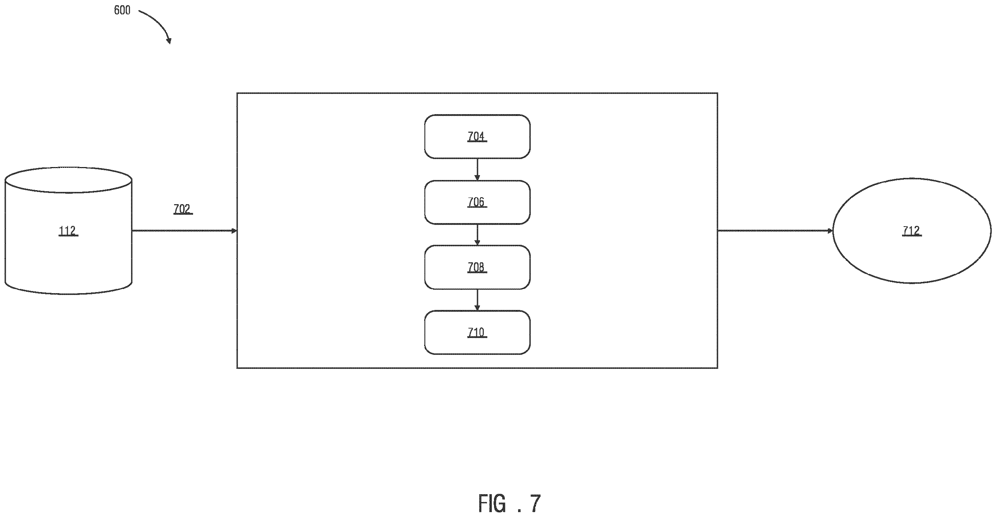

FIG. 7 is a flow diagram depicting an exemplary method 700 of detecting 3D objects, according to the embodiment of the present invention. At step 702, the method 700 comprises retrieving, by the processor 202, the sored sensor data form the database 112. The sensor data is from sensors such as LiDAR or stereo cameras and represents the geometry of objects in 3D space. Preprocessing might involve noise reduction, normalization, and other steps to prepare the raw data for analysis.

At step 704, the method 700 comprises identifying, by the processor 202, regions within the point cloud that are likely to contain objects, using object proposal generation algorithm. This step involves generating bounding boxes or regions of interest (ROIs) that are passed through the detection pipeline. The goal is to propose potential locations where objects might be present.

At step 706, the method 700 comprises applying, by the processor 202, ROI pooling, based on the generation of object proposals. This step extracts fixed-size feature maps from the proposed regions, which helps in standardizing the input for the subsequent neural network layers. ROI pooling is crucial as it allows the network to handle different-sized objects efficiently.

At step 708, the method 700 comprises providing, by the processor 202, the pooled regions to a convolutional neural network (CNN) or a fully convolutional neural network (FCNN). These networks extract deeper features from the proposed regions, helping to classify and refine the detection of objects within the point cloud. CNNs and FCNNs are powerful tools in recognizing patterns and details within the data.

At step 710, the method 700 comprises eliminating, by the processor 202, redundant or overlapping bounding boxes, based on the detected potential objects are detected, using non-maximum suppression (NMS). This step ensures that only the most accurate and relevant bounding boxes are kept, reducing false positives and improving the precision of the detection.

At step 712, the method 700 comprises segmenting, by the processor 202, the one or more objects, which are the detected objects isolated from the point cloud data. These segmented objects are the final output, ready for further processing or use in applications such as autonomous driving, robotics, or 3D modelling.

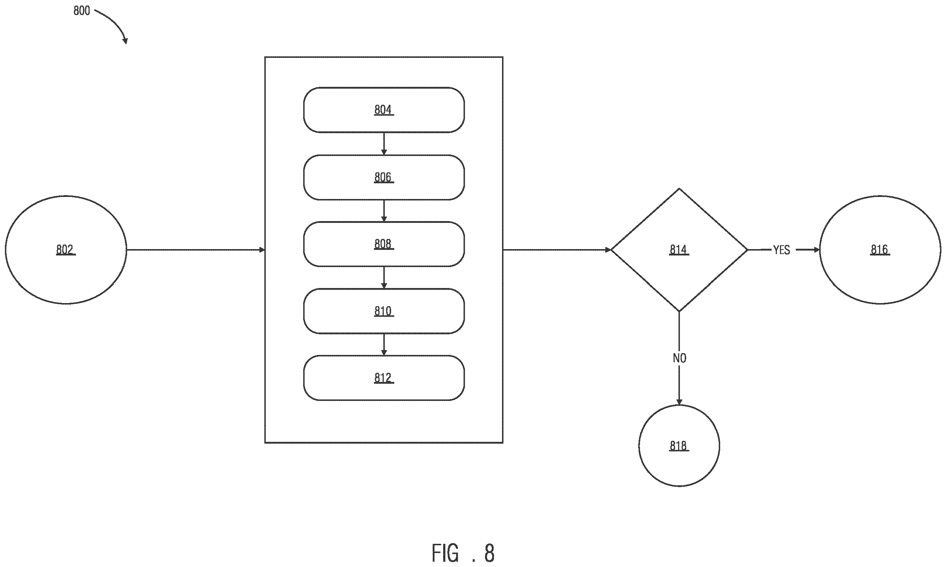

FIG. 8 is a flow diagram depicting an exemplary method 800 of detecting occlusion in one or more scenes, according to the embodiment of the present invention. At step 802, the method 800 comprises retrieving, by the processor 202, the segmented objects, from the database 112. The segmented objects are typically the output from a previous 3D object detection pipeline. These objects have already been isolated from the surrounding data and are ready for further analysis to determine, if the objects are occluded.

At step 804, the method 800 comprises generating, by the processor 202, first hypotheses regarding potential occlusions. This step involves predicting where and how objects might be occluded based on their positions, orientations, and relationships within the scene. Hypotheses are essential for guiding the subsequent analysis and are based on spatial and contextual clues from the segmented objects.

At step 806, the method 800 comprises detecting, by the processor 202, occlusions using feature-based techniques. This step involves extracting specific features from the objects and their surroundings, such as edges, textures, or depth information, which might indicate occlusion. The analysis can include comparing these features across different objects to identify inconsistencies or interruptions that suggest one object is partially or fully blocking another.

At step 808, the method 800 comprises estimating, by the processor 202, visibility of each object. This involves calculating how much of each object is visible within the scene and to what extent it might be obscured by other objects. Visibility estimation is crucial for quantifying the degree of occlusion and determining which parts of the object are occluded.

At step 810, the method 800 comprises performing, by the processor 202, depth discontinuity analysis, based on the visibility estimation. This step examines the depth information of the objects in the scene to detect abrupt changes or discontinuities that indicate occlusion. Depth discontinuities are strong indicators that one object is in front of another, partially blocking the view of the occluded object.

At step 812, the method 800 comprises determining, by the processor 202, the likelihood of occlusion for each object, based on the visibility estimation and depth analysis, using probabilistic modelling. This involves creating a statistical model that quantifies the probability that an object is occluded, incorporating uncertainties and variations in the observed data.

At step 814, the method 800 comprises evaluating, by the processor 202, whether an occlusion has been observed or detected. This decision is typically made by comparing the computed likelihood of occlusion against a predefined threshold.

At step 816, the method 800 comprises handling, by the processor 202, of occluded objects, if the processor 202 determines that occlusion is present. At step 818, the method 800 comprises terminating, by the processor 202, object detection, if no occlusion is detected.

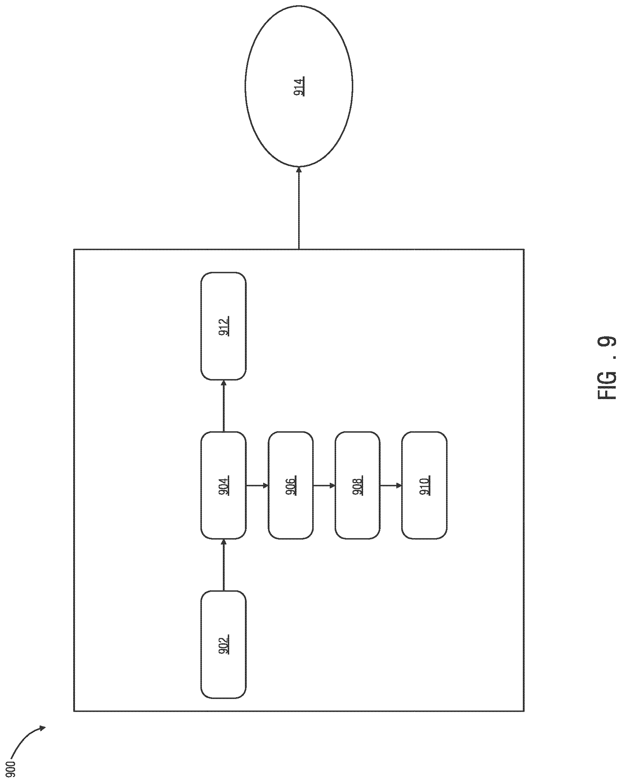

FIG. 9 is a flow diagram depicting an exemplary method 900 of integrating model with downstream tasks, according to the embodiment of the present invention. At step 902, the method 900 comprises identifying, by the processor 202, regions of the objects that are occluded, which were detected in the previous steps. This step involves precisely pinpointing the parts of the segmented objects that are hidden or partially obscured in the scene. The accurate identification of these regions is crucial for generating an effective response in the subsequent steps.

At step 904, the method 900 comprises generating, by the processor 202, a neural network or a computational model designed to handle the specific characteristics of these occlusions, after identifying the occluded regions. This network is tailored to process the occluded regions effectively, potentially predicting the hidden parts of the objects or understanding the scene's context better despite the occlusion.

At step 906, the method 900 comprises designing, by the processor 202, the network architecture model. This involves selecting the appropriate type of neural network (e.g., CNN, RNN) and configuring its layers, parameters, and connections to best handle the occlusion-related tasks.

At step 908, the method 900 comprises training and fine-tuning, by the processor 202, the model, using a dataset that comprises examples of occluded objects. The training process involves optimizing the network's parameters to minimize prediction errors. Fine-tuning adjusts the network based on specific task requirements or domain-specific data to enhance its performance.

At step 910, the method 900 comprises assessing, by the processor 202, the performance of the model, using various metrics (e.g., accuracy, precision, recall) to ensure the model meets the desired quality standards. If the model does not perform satisfactorily, it may undergo further adjustments or retraining.

At step 912, the method 900 comprises integrating, by the processor 202, the trained and validated network, with the existing occlusion detection system. This step involves ensuring that the new model works seamlessly with the previous components, such as the feature-based detection and visibility estimation processes. The integration ensures that the system can now handle occlusions more effectively by leveraging the newly generated network.

At step 914, the method 900 comprises integrating, by the processor 202, the enhanced occlusion detection system with various downstream tasks that rely on accurate object detection and scene understanding. These tasks might include collision avoidance, navigation, or decision-making systems in autonomous vehicles or robotics. The goal of this integration is to use the improved occlusion handling to inform and optimize these downstream processes, thereby preventing collisions and improving overall system safety and performance. The integration with downstream tasks allows the system to make informed decisions based on the enhanced occlusion detection capabilities. For example, in an autonomous driving scenario, the system might decide to slow down or change direction to avoid a potential collision with an occluded object that has been detected by the enhanced network.

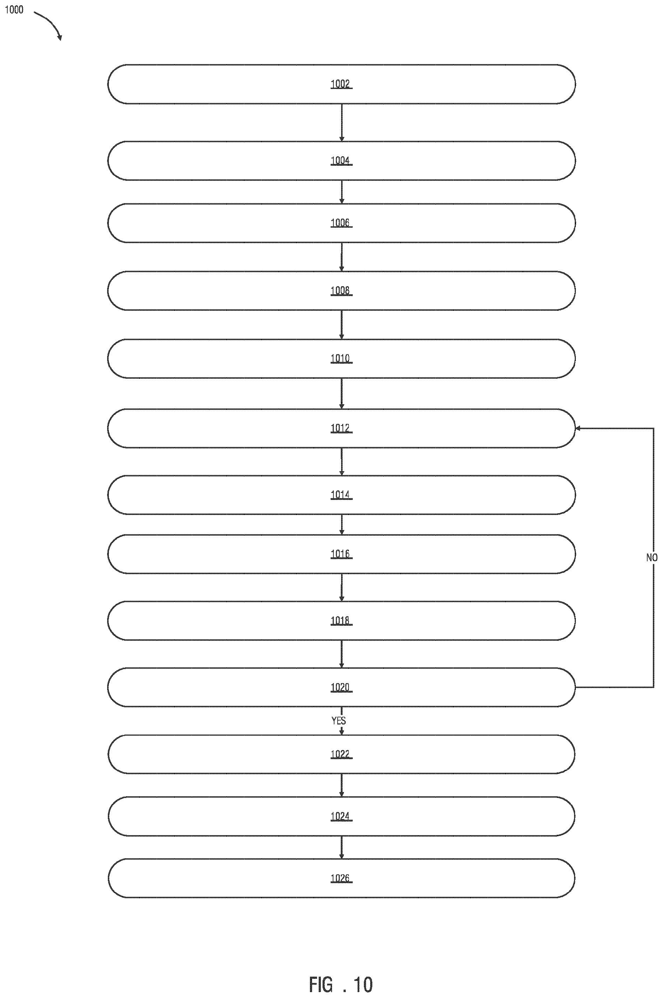

FIG. 10 is a flow diagram depicting an exemplary method 1000 of training generator and discriminator of a generative adversarial network (GAN) networks, according to the embodiment of the present invention. At step 1002, the method 1000 comprises capturing, by the processor 202, capturing, via sensors, and loading a point cloud data for a scene. The process begins with capturing and loading Point Cloud data, which likely represents 3D spatial information of a scene.

At step 1004, the method 1000 comprises extracting, by the processor 202, and preprocessing the point cloud data to obtain occlusion probabilities (missing data points) in the data. The loaded data undergoes preprocessing to extract occlusion probabilities.

At step 1006, the method 1000 comprises identifying, by the processor 202, missing or occluded data points in the point cloud, which are crucial for accurate modelling. The processor 202 determines occlusion mask. An occlusion mask is created, which maps the areas where data is missing or occluded. This mask will be used in subsequent steps to inform the model about gaps in the data.

At step 1008, the method 1000 comprises initiating, by the processor 202, N random GAN architecture generation and training to create models capable of generating data points based on the point cloud data acquired to this point. At this stage, the processor 202 generates a random GAN architecture. This GAN is trained to create models that can generate missing data points based on the existing point cloud data, helping to fill in the gaps identified by the occlusion mask.

At step 1010, the method 1000 comprises evaluating, by the processor 202, a fitness value (chamber distance (CD)) for the generated models by measuring the distance (error) from the ground-truth data. The models generated by the GAN are evaluated based on a fitness value, which likely measures the accuracy of the generated data compared to known or ground-truth data. Chamber distance (CD) is the metric used for this evaluation. The fitness score, reflecting the accuracy of the generated data, is updated based on the Chamber Distance. This score helps in selecting and refining the best-performing models.

At step 1012, the method 1000 comprises selecting, by the processor 202, top N' GAN models, based on the calculated fitness value. At step 1014, the method 1000 comprises evolving, by the processor 202, new N" number of GAN models using cross-over, speciation, mutation operation. At step 1016, the method 1000 comprises performing, by the processor 202, adversial training on the point cloud data acquired using evolution strategy.

At step 1018, the method 1000 comprises re-evaluating, by the processor 202, fitness score for N'+N" GAN models. At step 1020, the method 1000 comprises determining, by the processor 202, if desired fitness score of the N'+N" GAN models is achieved. At step 1022, the method 1000 comprises performing refinement/training, by the processor 202, on the good selected and rejecting low-fitness models, if the desired fitness score is achieved. The processor 202 performs further refinement and training on models with good fitness scores while rejecting those with poor performance. This iterative process improves the quality of the generated data. If the desired fitness score is not achieved, iterate for fixed number of epochs, for selecting top N' models.

At step 1024, the method 1000 comprises validating, by the processor 202, the base model on the test data.

At step 1026, the method 1000 comprises utilizing, by the processor 202, the trained GAN model for generating missing data points. The refined GAN model is then employed to generate the missing data points in the point cloud. This step completes the generation of a more complete and accurate data set.

The CoDeepNeat is an evolutionary algorithm that enhances the exploration of neural network architectures, particularly for Generative Adversarial Networks (GANs). By utilizing evolutionary techniques, CoDeepNeat broadens the search space and reduces the likelihood of the network getting trapped in local optima. This method allows for the evolution and modification of network architectures dynamically, enabling the discovery of optimal configurations without the need for manual design or hyperparameter tuning. As a result, CoDeepNeat-based GANs can find better solutions and avoid suboptimal convergence, leading to more efficient and effective models.

In traditional GAN training, the generator and discriminator networks are typically trained sequentially rather than in parallel. The proposed invention introduces two key innovations to improve this process. Unlike conventional methods that rely on fixed, pretrained GANs and optimize within the latent space, this approach dynamically adapts GAN architectures specifically for point cloud completion tasks. This ensures a more accurate and problem-specific fit, leading to better performance in generating or completing point cloud data. Traditional GAN optimization relies heavily on gradient descent methods, which can sometimes limit the exploration of potential solutions. By adopting gradient-free evolutionary algorithms, the proposed approach allows for the evolution and optimization of GAN architectures without depending on gradient-based updates. This opens up new avenues for exploring and improving network performance, potentially leading to more innovative and effective solutions.

The training process of the CoDeepNeat-based GANs begins with the initialization phase, where the population size, maximum number of generations, and other relevant parameters are set. The initial population of GAN architectures, including both Generator and Discriminator networks, is then created using random blueprint and module configurations. Each performance of the GAN models is evaluated using a fitness function that measures how effectively the network augments point clouds.

During the evolutionary loop, the algorithm iteratively selects the best-performing GAN architectures based on the fitness scores. Evolutionary operations such as crossover and mutation are applied to create new offspring architectures, introducing genetic variation and enhancing the diversity of the population. Additional random variations are introduced by mutating the blueprints and modules of these offspring networks. To further optimize the parameters within individual networks, a pattern-producing network is evolved using a sub-evolutionary algorithm like NEAT or CoDeepNeat. This network optimizes the weights of all the offspring-generated networks during each epoch.

After the evolutionary loop concludes, the best-performing GAN architecture(s) are selected based on their final fitness scores. These architectures are considered the optimal solutions for point cloud data augmentation. Finally, the selected GANs undergo a fine-tuning process using traditional gradient descent or other optimization techniques. This enhances the performance and convergence of the GANs on the specific task of point cloud data augmentation;

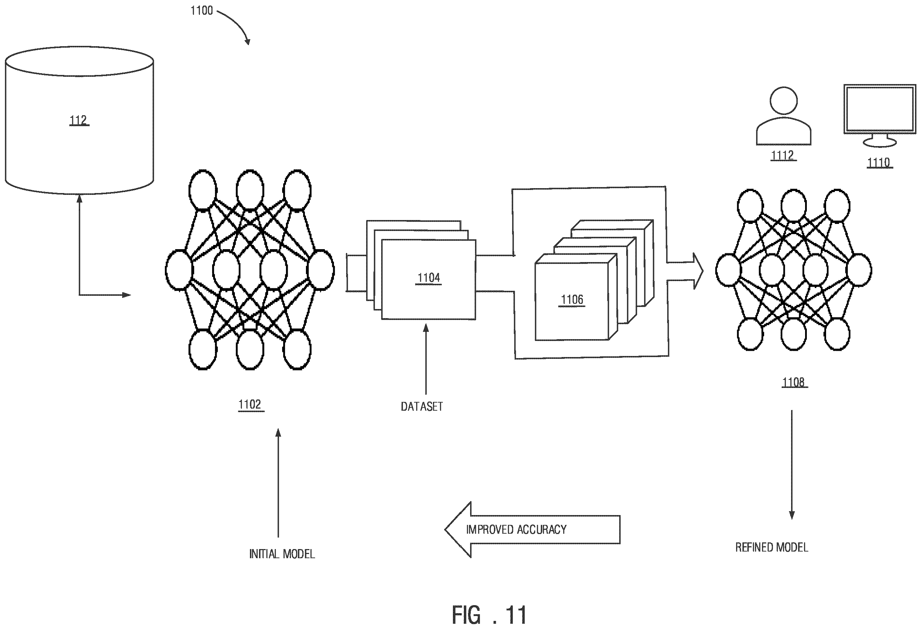

FIG. 11 is a data flow diagram illustrating a process flow of generating primary GAN models 1102, secondary GAN models 1108, according to the embodiment of the present invention. FIG. 11 depicts a data flow diagram for a process 1100 to train, retrain, or update an artificial intelligence (AI)/ machine learning (ML) model. In an exemplary embodiment, process 1100 may be executed using, as a non-limiting example, the computing system 102 of FIG. 1. In at least one exemplary embodiment, process 1100 may leverage services and/or hardware of the computing system 102, as described herein. In at least one exemplary embodiment, refined models 1108 generated by the process 1100 may be executed by deployment system 102 for one or more containerized applications in deployment pipelines.

In at least one exemplary embodiment, model training may include retraining or updating an initial model 1102(e.g., a pre-trained model) using new training data (e.g., new input data, such as dataset 1104, and/or new ground truth data or point cloud input data associated with input data). The initial model may be the primary GAN models 1102 In at least one exemplary embodiment, to retrain, or update, initial model 1102, output or loss layer(s) of initial mode 1102 may be reset, or deleted, and/or replaced with an updated or new output or loss layer(s). In at least one exemplary embodiment, initial model 1102 may have previously fine-tuned parameters (e.g., weights and/or biases) that remain from prior training, so training or ] retraining may not take as long or require as much processing as training a model from scratch. In at least one embodiment, during model training, by having reset or replaced output or loss layer(s) of initial model 1102, parameters may be updated and re-tuned for a new data set based on loss calculations associated with accuracy of output or loss layer(s) at generating predictions on new, dataset 1104 (e.g., 3D multimedia data, 3D data, point cloud input data, sensor data).

In at least one embodiment, pre-trained GAN models may be stored in a data store, or registry (e.g., model registry) or database 112. In at least one exemplary embodiment, pre-trained models may have been trained, at least in part, at one or more facilities other than a facility executing process 1100.

In at least one embodiment, when selecting applications for use in deployment pipelines, a user 1112 may also select machine learning models to be used for specific applications. In at least one embodiment, the user 1112 may not have a model for use, so a user may select a pre-trained model to use with an application. In at least one embodiment, pre-trained model may not be optimized for generating accurate results on the dataset 1104 of a technical installation. In at least one embodiment, prior to deploying pre-trained model into deployment pipeline for use with an application(s), pre-trained mode may be updated, retrained, and/or fine-tuned for use at a respective technical installation.

In at least one embodiment, the user 1112 may select pre-trained model that is to be updated, retrained, and/or fine-tuned, and pre-trained model may be referred to as the initial model 1102 for training system within the process 1100.

In at least one embodiment, the user 1112 may use a user interface (a graphical user interface (GUI)) on a computing device 1110 to view occluded 3D multimedia data and/or augmented/reconstructed data of one or more scenes.

In at least one embodiment, the refined model 1108 may be uploaded to pre-trained models in model registry to be selected by another technical installation. In at least one embodiment, this process may be completed at any number of technical installations such that refined model 1108 may be further refined on new datasets any number of times to generate a more universal GAN model or a plurality of secondary GAN models.

Each of the plurality of primary GAN models, and each of the plurality of secondary GAN models comprise a generator sub-model and a discriminator sub-model. Each of the plurality of primary GAN models and the secondary GAN models are initialized with a plurality of topologies and a plurality of module configurations.

The proposed evolutionary GAN (Co-GAN) based training method addresses significant challenges such as vanishing gradients and mode collapse, which are common in traditional GAN training. Training a specific GAN architecture using gradient descent can be time-consuming, and if the trained model does not perform as expected, the process can lead to wasted time and resources. However, by initially evolving the architecture using evolutionary algorithms, and then applying gradient descent if necessary, this combined methodology significantly enhances the potential for achieving optimal GAN performance. This approach reduces the risk of investing in a subpar outcome and maximizes the efficiency of the training process.

The CoDeepNEAT GAN, employs a compositional approach where neural network architectures are built from modular components. This allows for the evolution of complex and diverse network structures by combining different modules, offering flexibility in creating architectures tailored specifically to the needs of the GAN and the point cloud data augmentation task. The CoDeepNEAT facilitates adaptive evolution by allowing mutations in the blueprint and modules of the network structures. This adaptability ensures that GAN architectures evolve and optimize over time, leading to potentially improved performance and more effective point cloud data augmentation.

Evolutionary GAN training enhances the robustness of models against variations and uncertainties in point cloud data. By training on a diverse set of augmented data, models become more resilient to noise, occlusions, and other common real-world challenges, leading to more reliable performance. This training method promotes the generation of diverse and novel synthetic samples in point cloud data. By evolving the GAN architecture and optimizing the generator network through evolutionary algorithms, the system can produce a broader range of augmented data, enhancing data diversity for model training. Evolutionary GAN training equips models with the flexibility to adapt to new or unseen scenarios. Through continuous evolution of the GAN architecture and training on augmented data, models become more capable of handling different environments, object variations, and data conditions, ensuring strong performance in diverse real-world situations. This approach also reduces the need for extensive manual annotation of point cloud data. By leveraging evolutionary algorithms, the GAN can generate synthetic samples that capture desired variations and characteristics, decreasing the reliance on manually labelled data for training.

In the context of both factory floors and autonomous vehicles, the Evolutionary GAN (Co-GAN) based training approach offers substantial advantages for overcoming occlusion handling challenges. On the factory floor, where machinery, equipment, and products often obstruct each other, the compositional approach of Co-GAN allows for the creation of neural network architectures that excel in recognizing and interpreting occluded objects within complex scenes. This tailored design enhances the model's ability to navigate and understand obscured information, thereby improving the accuracy and reliability of operations in manufacturing processes. The adaptive network evolution ensures that the model continuously optimizes its occlusion-handling capabilities, adapting to changes in factory layouts and processes. This results in a model that is increasingly robust and resilient to the occlusion challenges commonly encountered in dynamic manufacturing environments.

In autonomous vehicles, where roads are populated with diverse objects and obstacles that can occlude each other, Evolutionary GAN training is crucial for enhancing occlusion handling. The compositional nature of this approach enables the creation of neural network architectures specifically designed to recognize and respond to occluded objects on the road. Adaptive network evolution allows the model to evolve in response to varying traffic scenarios, such as vehicles partially hidden behind obstacles. This adaptability is essential for improving the overall safety and reliability of autonomous vehicles, particularly in complex urban environments where occlusions are frequent. Additionally, the diverse synthetic samples generated during training enhance the model's ability to generalize and handle unforeseen occlusion patterns, making it robust across various driving conditions.

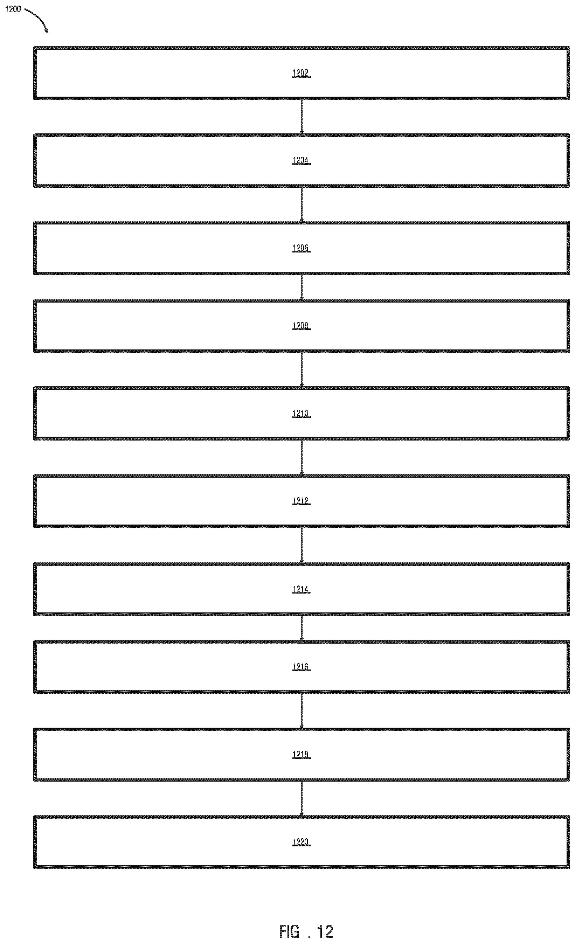

FIG. 12 is a process flowchart illustrating an exemplary method 1200 of managing occlusions in one or more scenes rendered in a computer-simulated environment, according to the embodiment of the present invention.

At step 1202, the method 1200 comprises receiving, by a processor 202, a three-dimensional (3D) multimedia data corresponding to one or more scenes to be rendered in the computer-simulated environment, from one or more data acquisition devices. The received 3D multimedia data comprises a point cloud input data associated with the computer-simulated environment. Further, the one or more scenes comprise one or more entities in a real-world environment.

At step 1204, the method 1200 comprises detecting, by a processor 202, one or more occluded regions in the one or more scenes, based on the received 3D multimedia data, using one or more Neural Networks (NNs).

At step 1206, the method 1200 comprises determining, by a processor 202, one or more model optimization parameters, based on the detected one or more occluded regions in the one or more scenes. The one or more optimization parameters comprise at least one of a population size of models, a maximum number of generation of models, network training parameters, a rate of change of genotypes, a speciation threshold, an elite fraction, a fitness function, a topology mutation rate, a module mutation rate, a node complexity rate, and a network selection strategy.

At step 1208, the method 1200 comprises generating, by a processor 202, a plurality of primary generative adversarial network (GAN) models corresponding to the detected one or more occluded regions in the one or more scenes, based on the determined one or more model optimization parameters. The plurality of primary GAN models comprises at least one of a Co-evolutionary Deep NeuroEvolution of Augmenting Topologies Generative Adversarial Network (CoDeep NEAT GAN) model, a Co-evolutionary Deep Generative Adversarial Network (CoDeep GAN) model, a NeuroEvolution of Augmenting Topologies Generative Adversarial Network (NEAT GAN) model, a Co-evolutionary Generative Adversarial Network (Co-GAN) model, and a base models of Generative Adversarial Network (base-GAN) model.

At step 1210, the method 1200 comprises evaluating, by a processor 202, a fitness value of the generated plurality of primary GAN models, by creating an occluded data for the point cloud input data using the generated plurality of primary GAN models.

At step 1212, the method 1200 comprises iteratively generating, by a processor 202, a plurality of secondary GAN models, until at least one criteria is satisfied. At least one criteria comprises at least one of reaching a maximum number of target GAN models and reaching one or more target fitness values. The plurality of secondary GAN models comprises at least one of a Co-evolutionary Deep NeuroEvolution of Augmenting Topologies Generative Adversarial Network (CoDeep NEAT GAN) model, a Co-evolutionary Deep Generative Adversarial Network (CoDeep GAN) model, a NeuroEvolution of Augmenting Topologies Generative Adversarial Network (NEAT GAN) model, a Co-evolutionary Generative Adversarial Network (Co-GAN) model, and a base models of Generative Adversarial Network (base-GAN) model.

At step 1214, the method 1200 comprises identifying, by a processor 202, one or more optimal GAN models from the iteratively generated plurality of secondary GAN models, based on the evaluated fitness value. Each of the plurality of primary GAN models, and each of the plurality of secondary GAN models comprise a generator sub-model and a discriminator sub-model. Each of the plurality of primary GAN models and the secondary GAN models are initialized with a plurality of topologies and a plurality of module configurations.

At step 1216, the method 1200 comprises reconstructing, by a processor 202, the detected one or more occluded regions in the 3D multimedia data corresponding to one or more scenes, using the identified one or more optimal GAN models.

At step 1218, the method 1200 comprises superimposing, by a processor 202, the reconstructed 3D multimedia data with the one or more scenes, to generate an augmented 3D visualization of the one or more scenes.

At step 1220, the method 1200 comprises outputting, by a processor 202, the augmented 3D visualization of the one or more scenes on a user interface associated with an electronic device.

The order in which the method 1200 is described is not intended to be construed as a limitation, and any number of the described method blocks may be combined or otherwise performed in any order to implement the method 1200 or an alternate method. Additionally, individual blocks may be deleted from the method 1200 without departing from the spirit and scope of the ongoing description. Furthermore, the method 1200 may be implemented in any suitable hardware, software, firmware, or a combination thereof, that exists in the related art or that is later developed. The method 1200 describes, without limitation, the implementation of the computing system 102. A person of skill in the art will understand that method 1200 may be modified appropriately for implementation in various manners without departing from the scope of the ongoing description.

Embodiments of the present invention provides a method and a system for managing occlusions in one or more scenes rendered in a computer-simulated environment. The proposed Evolutionary GAN (Co-GAN) based training method provides significant advantages, particularly in overcoming challenges associated with eliminating gradients and mode collapse, common issues in traditional GAN training using gradient descent. The present invention mitigates the time and resources associated with training GANs, and in turn enhances overall performance and reliability of the models.

One of the key advantages of this method is its compositional approach, as employed by CoDeepNEAT. This approach enables the construction of neural network architectures from modular components, allowing for the evolution of complex and diverse network structures. Such flexibility is crucial in tailoring GAN architectures to meet specific requirements, particularly for tasks such as point cloud data augmentation.

The present invention comprises adaptive nature of network evolution, by mutating the blueprint and modules. The GAN architectures are able to evolve and optimize continuously over time. This adaptability ensures that the GAN models improve the performance incrementally, making the GAN models more effective in handling various data augmentation tasks.

The method also promotes diversity in the generated data. Evolutionary GAN training encourages the generation of a broader range of synthetic samples, thereby enhancing the diversity of data available for training models. This diversity is critical for improving the generalization capabilities of the models, enabling them to perform better in diverse and dynamic environments.

In addition, the training approach provides significant adaptability to new or unseen scenarios. The continuous evolution of GAN architectures and the ongoing training on augmented data allow models to remain flexible and capable of adapting to different environments, object variations, and data conditions. This flexibility is particularly beneficial in real-world applications where conditions can vary widely. Finally, evolutionary GAN training reduces the effort required for manual annotation of point cloud data. By leveraging evolutionary algorithms to generate synthetic samples that encapsulate the desired variations, the method decreases the reliance on manually labelled data, thereby streamlining the training process.

In specific contexts such as factory floors and autonomous vehicles, the Co-GAN based training approach provides substantial benefits in addressing occlusion handling challenges. In manufacturing environments, the compositional approach allows for the creation of neural network architectures that excel in recognizing and interpreting occluded objects within complex scenes. This tailored capability enhances operational accuracy and reliability, making the models highly resilient to the dynamic challenges of real-world manufacturing settings. By leveraging the enhanced GAN, the present invention aims to significantly enhance the accuracy and reliability of point cloud interpolation while minimizing occlusion challenges, in turn advancing the capabilities and performance of point cloud processing techniques. The present invention can take a form of a computer program product comprising program modules accessible from computer-usable or computer-readable medium storing program code for use by or in connection with one or more computers, processors, or instruction execution system. For the purpose of this description, a computer-usable or computer-readable medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processors and program code for implementing each aspect of the technology can be centralized or distributed (or a combination thereof) as known to those skilled in the art.

While the present invention has been described in detail with reference to certain embodiments, it should be appreciated that the present invention is not limited to those embodiments. In view of the present disclosure, many modifications and variations would be present themselves, to those skilled in the art without departing from the scope of the various embodiments of the present invention, as described herein. The scope of the present invention is, therefore, indicated by the following claims rather than by the foregoing description. All changes, modifications, and variations coming within the meaning and range of equivalency of the claims are to be considered within their scope. All advantageous embodiments claimed in method claims may also be apply to system/apparatus claims.

**Reference numerals:**

| | |
|---|---|
| 100 | Computing environment |
| 102 | Computing system |
| 104 | Data acquisition devices |
| 106 | Entities |
| 108 | Communication network |
| 110 | Electronic device |
| 112 | Database |
| 114 | hardware processor(s) |
| 116 | memory |
| 118 | Plurality of modules |
| 120 | Computer-simulated environment |
| 122 | Technical installation |
| 202 | Processor(s) |
| 204 | Memory |
| 206 | Communication interface |
| 208 | Network interface |
| 210 | Input/output unit |
| 212 | Bus |
| 214 | Occlusion management module |
| 302 | Data receiving module |
| 304 | Occluded regions detecting module |
| 306 | Model optimization parameters determining module |
| 308 | Generative adversarial network (GAN) models generating module |
| 310 | Fitness value evaluating module |
| 312 | Optimal GAN models identifying module |
| 314 | Scene reconstructing module |
| 316 | Multimedia data superimposing module |
| 318 | Augmented 3D visualization outputting module |
| 1002 | Initial model/ Primary GAN models |
| 1004 | Dataset |
| 1008 | Refined model/ Secondary GAN models |
| 1110 | Computing device |
| 1112 | User |

## Claims

1. A method (1200) for managing occlusions in one or more scenes rendered in a computer-simulated environment (120), the method (1200) comprising:
receiving, by a processor (114), a three-dimensional (3D) multimedia data corresponding to one or more scenes to be rendered in the computer-simulated environment (120), from one or more data acquisition devices (104), wherein the received 3D multimedia data comprises a point cloud input data associated with the computer-simulated environment (120), and wherein the one or more scenes comprise one or more entities (106) in a real-world environment;
detecting, by the processor (114), one or more occluded regions in the one or more scenes, based on the received 3D multimedia data, using one or more Neural Networks (NNs);
determining, by the processor (114), one or more model optimization parameters, based on the detected one or more occluded regions in the one or more scenes;
generating, by the processor (114), a plurality of primary generative adversarial network (GAN) models corresponding to the detected one or more occluded regions in the one or more scenes, based on the determined one or more model optimization parameters;
evaluating, by the processor (114), a fitness value of the generated plurality of primary GAN models, by creating an occluded data for the point cloud input data using the generated plurality of primary GAN models;
iteratively generating, by the processor (114), a plurality of secondary GAN models, until at least one criteria is satisfied, wherein the at least one criteria comprises at least one of reaching a maximum number of target GAN models and reaching one or more target fitness values;
identifying, by the processor (114), one or more optimal GAN models from the iteratively generated plurality of secondary GAN models, based on the evaluated fitness value;
reconstructing, by the processor (114), the detected one or more occluded regions in the 3D multimedia data corresponding to one or more scenes, using the identified one or more optimal GAN models;
superimposing, by the processor (114), the reconstructed 3D multimedia data with the one or more scenes, to generate an augmented 3D visualization of the one or more scenes; and
outputting, by the processor (114), the augmented 3D visualization of the one or more scenes on a user interface associated with an electronic device (110).

2. The method (1200) as claimed in claim 1, wherein identifying the one or more optimal GAN models from the iteratively generated plurality of secondary GAN models, further comprises:
determining, by the processor (114), a performance level of each of the generated plurality of secondary GAN models, based on the evaluated fitness value;
performing, by the processor (114), at least one of a crossover operation, a speciation operation, and a mutation operation to the generated plurality of secondary GAN models, based on the determined performance level; and
generating, by the processor (114), the plurality of secondary GAN models, based on the performed at least one of the crossover operation, the speciation operation, and the mutation operation, wherein each of the plurality of secondary GAN models comprise one or more genetic variations.

3. The method (1200) as claimed in claim 2, further comprises:
modifying, by the processor (114), the generated plurality of secondary GAN models, by mutating a plurality of topologies and a plurality of module configurations associated with the generated plurality of secondary GAN models;
updating, by the processor (114), the one or more model optimization parameters to generate the plurality of secondary GAN models, using a plurality of tertiary GAN networks;
evaluating, by the processor (114), a secondary fitness value of the generated plurality of secondary GAN models, using one or more predefined fitness rules, based on the updated one or more model optimization parameters;
identifying, by the processor (114), the one or more optimal GAN models from the generated plurality of secondary GAN models, based on the evaluation; and
fine-tuning, by the processor (114), the identified one or more optimal GAN models, using at least one of a gradient descent technique and a plurality of optimization techniques.

4. The method (1200) as claimed in claim 3, wherein updating the one or more model optimization parameters to generate the plurality of secondary GAN models, using the plurality of tertiary GAN networks, further comprises:
generating, by the processor (114), optimized weight initialization values for the plurality of secondary GAN models, using the plurality of tertiary GAN networks, and wherein the optimized weight initialization values for the plurality of secondary GAN models is based on mutating, during each epoch, a similar tertiary GAN network.

5. The method (1200) as claimed in claim 1, wherein generating the plurality of the primary GAN models, further comprises:
iteratively training, by the processor (114), the generated plurality of primary GAN models, using a historical point cloud data;
validating, by the processor (114), the trained plurality of primary GAN models on a test dataset comprising a plurality of occlusion scenarios; and
fine-tuning, by the processing, the trained plurality of primary GAN models, based on results of the validation, wherein fine-tuning comprises performing hyperparameter optimization of the point cloud data, wherein the hyperparameter optimization comprises at least one of adjusting learning rates, batch sizes, and regularization techniques.

6. The method (1200) as claimed in claim 1, wherein receiving the 3D multimedia data corresponding to the one or more scenes in the computer-simulated environment (120), further comprises:
generating, by the processor (114), a synchronized 3D multimedia data by synchronizing the 3D multimedia data received from the one or more data acquisition devices (104), with a pre-defined 3D multimedia data, wherein the one or more data acquisition devices (104) comprises at least one of a Light Detection and Ranging (LIDAR) sensor, a Radio Detection and Ranging (RADAR) sensor, a Red Green Blue (RGB) depth sensor, stereo camera, and a camera; and
pre-processing, by the processor (114), the synchronized 3D multimedia data, wherein preprocessing the synchronized 3D multimedia data comprises:
filtering, by the processor (114), a noise data from the synchronized 3D multimedia data;
filtering, by the processor (114), one or more outlier data points from the synchronized 3D multimedia data, using at least one of a distance-based filtering technique and a range-based filtering technique, wherein the one or more outlier data points correspond to a value exceeding at least one of a pre-defined distance and a pre-defined range;
generating, by the processor (114) a voxel grid visualization data by converting the synchronized 3D multimedia data into the voxel grid visualization data; and
down-sampling, by the processor (114), the generated voxel grid visualization data to optimize a density of the one or more outlier data points in the received point cloud input data; and
storing, by the processor (114), in a database (112), the pre-processed point cloud input data represented in a three-dimensional (3D) space, based on the down-sampling of the voxel grid visualization data.

7. The method (1200) as claimed in claim 6, further comprises:
retrieving, by the processor (114), the pre-processed point cloud input data represented in the 3D space, from the database;
generating, by the processor (114), one or more feature maps corresponding to the pre-processed point cloud input data by performing a region of interest (RoI) pooling on the pre-processed point cloud input data;
detecting, by the processor (114), one or more candidate objects within the RoI corresponding to the generated one or more feature maps, using one or more Convolutional Neural Networks (CNNs);
suppressing, by the processor (114), at least one of one or more overlapping detections and one or more redundant detections in the detected one or more candidate objects within the RoI, using a non-maximum suppression technique; and
segmenting, by the processor (114), a set of objects in the pre-processed point cloud input data, based on the suppressed at least one of the one or more overlapping detections and the one or more redundant detections in the detected candidate objects.

8. The method (1200) as claimed in claim 1, wherein detecting one or more occluded regions in the one or more scenes, further comprises:
obtaining, by the processor (114), a set of segmented objects in the one or more scenes, based on preprocessing the 3D multimedia data;
generating, by the processor (114), one or more hypotheses data corresponding to one or more potential occlusions between the set of segmented objects;
detecting, by the processor (114), one or more occluded regions in the one or more scenes, based on the generated one or more hypotheses data and one or more feature maps;
estimating, by the processor (114), a visibility of each of the set of segmented objects, based on detecting the one or more occluded regions in the one or more scenes;
analysing, by the processor (114), one or more depth discontinuity levels between the set of segmented objects, based on the estimated visibility;
assessing, by the processor (114), a possibility of occlusion in the one or more occluded regions for each of the set of segmented objects, based on the analysed one or more depth discontinuity levels using probabilistic models; and
determining, by the processor (114), the one or more occluded regions based on results of assessment.

9. The method (1200) as claimed in claim 1, wherein the plurality of primary GAN models and the plurality of secondary GAN models comprises at least one of a Co-evolutionary Deep NeuroEvolution of Augmenting Topologies Generative Adversarial Network (CoDeep NEAT GAN) model, a Co-evolutionary Deep Generative Adversarial Network (CoDeep GAN) model, a NeuroEvolution of Augmenting Topologies Generative Adversarial Network (NEAT GAN) model, a Co-evolutionary Generative Adversarial Network (Co-GAN) model, and a base models of Generative Adversarial Network (base-GAN) model.

10. The method (1200) as claimed in claim 1, wherein the one or more optimization parameters comprise at least one of a population size of models, a maximum number of generation of models, network training parameters, a rate of change of genotypes, a speciation threshold, an elite fraction, a fitness function, a topology mutation rate, a module mutation rate, a node complexity rate, and a network selection strategy.

11. The method (1200) as claimed in claim 1, wherein each of the plurality of primary GAN models, and each of the plurality of secondary GAN models comprise a generator sub-model and a discriminator sub-model, and wherein each of the plurality of primary GAN models and the secondary GAN models are initialized with a plurality of topologies and a plurality of module configurations.

12. The method (1200) as claimed in claim 2, wherein the crossover operation comprises combining a structural information of the primary GAN models and the plurality of secondary GAN models, wherein the speciation operation comprises segmenting the plurality of primary GAN models and the plurality of secondary GAN models into one or more distinct groups based on a topological similarity, and wherein the mutation operation comprises modifying the plurality of primary GAN models and the plurality of secondary GAN models.

13. A computing system (102) for managing occlusions in one or more scenes rendered in a computer-simulated environment (120), the computing system (102) comprising:
one or more processor(s) (114); and
a memory (116) coupled to the one or more processor(s) (114), wherein the memory (116) comprises an occlusion management module (118) stored in a form of machine-readable instructions executable by the one or more processor(s) (114), wherein the occlusion management module (118) is capable of performing method (1200) steps according to any of the claims 1-12.

14. A computing environment comprising:
one or more electronic devices (110);
one or more technical installations (122) comprising one or more entities (106) in a real-world environment; and
one or more data acquisition devices (104) configured to capture one or more scenes to be rendered in a computer-simulated environment (120); and
a computing system (102) communicatively coupled to the at least one of the one or more technical installations (122), the one or more data acquisition devices (104), and the one or more electronic devices (110) via a communication network (108), wherein the computing system (102) comprises an occlusion management module (118) capable of performing method (1200) steps according to any of the claims 1-12.

15. A computer-program product, having machine-readable instructions stored therein, that when executed by a processor(s) (114), cause the processor(s) (114) to perform method (1200) steps according to any of the claims 1-12.
